# EUROPEAN PATENT APPLICATION

(11) **EP 4 699 481 A1**
(43) Date of publication of application: **25.02.2026**
(21) Application number: 25196837.6
(22) Date of filing: 19.08.2025
(51) Int. Cl.: A41D 1/00

(54) **WEARABLE ITEM WITH PATTERNED FILAMENT OVERLAY**

(30) Priority: 20.08.2024 US 202463685141 P; 20.08.2024 US 202463685175 P; 31.07.2025 US 202519286945; 31.07.2025 US 202519286996
(71) Applicant: Amer Sports Canada Inc., North Vancouver, British Columbia V7H 1A8 (CA)
(72) Inventor: Herr, Joshua, Portland, 97211 (US); Babcock, Timothy, North Vancouver, V7M 1S2 (CA); Beamer, Bryce, Albion, 14411 (US)
(74) Representative: Lapierre, Stéphane

(57) **Abstract**

A wearable item may include at least one panel forming a back portion to extend along a back of a person and shoulder portions extending forwardly from the back portion. A patterned filament overlay (PFO) in the form of an individually formed line of material crossing itself or extending alongside itself over an area is located on the shoulder portions.

## Description

### BACKGROUND

Many wearable items worn by individuals, garments or gear, are used for carrying and distributing load. For example, garments in the form of running vests are often utilized to carry water bottles and other supplies. Gear, in the form of a backpack, is used to contain and carry clothing, equipment and the like. Gear in the form of a harness is often used to suspend an individual wearing the harness. Many garments and gear worn by individuals are also subject to abrasion and wear over time.

Textiles play an important role in the functionality of footwear and other textile-based products, particularly in applications involving motion and movement. The type of yarns and materials, as well as the textile structures used in creating these textiles, can be manipulated to optimize performance for specific applications. However, for environments requiring extreme durability, cushioning, or tailored mechanical behavior, these inherent textile properties are often insufficient. Accordingly, there is a need for improved textiles for use with footwear as well as other performance-based textile environments.

### BRIEF DESCRIPTION OF THE DRAWINGS

Figure 1 is a diagram schematically illustrating portions of an example fused filament fabrication system.
Figure 2A is a diagram illustrating an example path of a nozzle through and within a
   textile along the Z-axis for Z-dip mechanical locking, wherein the dots or spheres indicate blips in the polymer flow.
Figure 2B is a bottom perspective view illustrating an example textile penetrated by polymer using the system of Figure 1 with the nozzle passion in Figure 2A.
Figure 2C is a top perspective view of the polymer penetrated textile of Figure 2B.
Figure 3A is a top perspective view of an example cushion structure formed by pattern of polymer ejected or printed upon an example textile by the example system of Figure 1.
Figure 3B is a top perspective view of an example cushion structure formed by pattern of polymer ejected or printed upon an example textile by the example system of Figure 1.
Figure 3C is a top perspective view of an example cushion structure formed by pattern of polymer ejected or printed upon an example textile by the example system of Figure 1.
Figure 4A the top perspective view of a varied pattern of a polymer ejected or printed upon an example textile by the example system of Figure 1.
Figure 4B is a perspective view illustrating an example structure having a three-dimensional grid or pattern of polymer ejected by the system of Figure 1 and sandwiched between a pair of textile layers.
Figure 5 is a perspective view of an example structure having a patterned filament overlay printed upon an example textile with a less perforate or imperforate protective layer printed on top of the patterned filament overlay.
Figure 6A is a perspective view illustrating portions of a stack of different printed layouts or patterns of three-dimensional lattices of a polymer ejected by the system of Figure 1 on an example textile.
Figure 6B is a perspective view illustrating portions of a stack of different printed layouts or patterns of three-dimensional lattices of a polymer ejected by the system of Figure 1 on an example textile.
Figure 6C is a perspective view illustrating portions of a stack of different printed layouts or patterns of three-dimensional lattices of a polymer ejected by the system of Figure 1 on an example textile.
Figure 6D is a perspective view illustrating portions of a stack of different printed layouts or patterns of three-dimensional lattices of a polymer ejected by the system of Figure 1 on an example textile.
Figure 6E is a perspective view illustrating portions of a stack of different printed layouts or patterns of three-dimensional lattices of a polymer ejected by the system of Figure 1 on an example textile.
Figure 7A is a perspective view illustrating ejection and penetration of a polymer onto an example textile to provide the example textile with an example texture.
Figure 7B is a perspective view illustrating ejection and penetration of a polymer onto an example textile to provide the example textile with an example texture.
Figure 7C is a perspective view illustrating ejection and penetration of a polymer onto an example textile to provide the example textile with an example texture.
Figure 7D is a perspective view illustrating the ejection and penetration of a polymer onto an example textile to provide the example textile with an example texture.
Figure 8A is a diagram illustrating an example embossment of an example texture onto a polymer ejected or printed onto an example textile by the system of Figure 1.
Figure 8B is a diagram illustrating an example embossment of an example pattern on a polymer ejected or printed onto an example textile by the system of Figure 1.
Figure 8C is a diagram illustrating an example embossment of an example logo on a polymer ejected or printed onto an example textile by the system of Figure 1.
Figure 9 is a perspective view of an example wavy pattern of polymer ejected or printed onto an example textile by the system of Figure 1.
Figure 10 is a perspective view illustrating an example structure formed by ejection or deposition of crisscrossing lines of different polymers onto an example textile by the system of Figure 1.
Figures 11A, 11B and 11C are perspective views illustrating portions of an example spacers/cushion construction.
Figures 12A, 12B and 12C are perspective views illustrating portions of an example spacer/cushion construction.
Figure 13A is a sectional view illustrating portions of an example extruded polymer line for a portion of a patterned filament overlay.
Figure 13B is a sectional view illustrating portions of an example extruded polymer filament line for a portion of a patterned filament overlay.
Figure 13C is a sectional view illustrating portions of an example extruded polymer filament line for a portion of a patterned filament overlay.
Figure 13D is a sectional view illustrating portions of an example extruded polymer line for a portion of the patterned filament overlay.
Figure 13E is a sectional view illustrating portions of an example extruded polymer line for a portion of a patterned filament overlay.
Figure 13F is a sectional view illustrating portions of an example extruded polymer line for a portion of a patterned filament overlay.
Figure 13G is a sectional view illustrating portions of an example extruded polymer line for a portion of a patterned filament overlay.
Figure 14A is a front perspective view of an example running vest while being worn and having an example patterned filament overlay.
Figure 14B is a rear perspective view of the example running vest of Figure 14 while being worn.
Figure 15 is an enlarged perspective view of Figure 14A illustrating the example patterned filament overlay.
Figure 16A is a sectional view patterned filament overlay of Figure 15.
Figure 16B is a sectional view patterned filament overlay of Figure 15.
Figure 16C is a sectional view patterned filament overlay of Figure 15.
Figure 16D is a sectional view patterned filament overlay of Figure 15.
Figure 17 is a sectional view of a portion of the patterned filament overlay of Figure 15.
Figure 18A is a front perspective view of an example backpack while being worn and having example patterned filament overlays.
Figure 18B is a side perspective view of the example backpack of Figure 18A while being worn.
Figure 18C is a front view of an example shoulder strap for a backpack, the shoulder strap having example patterned filament overlays.
Figure 19 is a front perspective view of the example backpack of Figure 18A.
Figure 20 is a perspective view of an example hip or waist belt of the example backpack of Figure 18A.
Figure 21 is a front perspective view of an example harness having an example waist belt and an example leg loops having example patterned filament overlays.
Figure 22 is a front view illustrating portions of an example waist belt of the example harness of Figure 21.
Figure 23 is a front view illustrating portions of an example leg loop of the example harness of Figure 21.
Figure 24 is a front perspective view illustrating portions of an example pair of leg coverings having example in steps with example patterned filament overlays.
Figure 25 is an enlarged view of a portion of the example pair of leg coverings of Figure 24 illustrating one of the example patterned filament overlays.
Figure 26 is a cross-sectional view illustrating portions of an example pair of leg coverings having example in steps with example patterned filament overlays.
Figure 27 is an enlarged view of a portion of an example pair of leg coverings illustrating an example patterned filament overlay.
Figure 28 is a rear view of an example pair of shorts having example patterned filament overlays.
Figure 29 is a left side view of the example pair of shorts of Figure 28.
Figure 30 is enlarged portion of the pair of shorts of Figure 28.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION OF EXAMPLES

Aspects of the present technology is directed to textiles and related method and processes manufacturing textiles for use in, for example, footwear, apparel, outdoor products, and other suitable textile categories that benefit from improved performance. The present technology overcomes drawbacks experienced in the prior art and provides other benefits.

Embodiments of the present technology provides, inter alia, methods and processes for depositing thermoplastic materials directly onto textile surfaces to achieve zonal, gradiated, or monolithic performance enhancements. The textiles and associated materials have improved mechanical performance, bonding quality, and manufacturability, enabling the assembly of enhanced textile components with applications in footwear, advanced gear, technical apparel, etc. Deposition may occur on planar films or non-textile substrates, including substrates that may later be thermally bonded onto textiles or structural components in post-processing.

Aspects of the present technology provides a method and system for enhancing textile substrates through the computer-controlled deposition of polymeric materials, preferably thermoplastic polymers, using Fused Filament Fabrication (FFF) or similar extrusion-based additive manufacturing techniques. This technology enables programmable and spatially controlled modification of textile surfaces to impart improved mechanical, thermal, and aesthetic performance of the resulting textile. In at least one embodiment, the present technology provides a method for thermally processing a polymeric filament or pellet through a heated extrusion nozzle, which is moved in multiple degrees of freedom relative to a textile substrate. The nozzle deposits the polymer along a predetermined tool path, which is typically continuous to avoid stringing artifacts that occur due to polymer viscosity and flow behavior. The nozzle may be translated in the X and Y axes to define a path across the textile surface, while the Z-axis position can be varied to control engagement depth with the fabric. For example, the nozzle may be lowered toward or to the textile substrate during deposition to press molten polymer into the voids of the textile substrate. This process also increases the surface area for bonding and enables mechanical interlocking with the textile structure. The process may be applied to stationary or moving textiles and may occur on planar or contoured surfaces. This base process forms the foundation for the advanced enhancements and techniques detailed below.

In some embodiments, the technology provides a controlled method of depositing one or more polymers onto textiles to enhance performance of the resulting textile assembly regarding, for example abrasion resistance, durability, flexibility, moisture management, tensile strength, elasticity, thermal regulation, etc. The process ensures precise polymer application in three-dimensions, enabling customizable and efficient modifications ideal for footwear, apparel, mountaineering gear, robotics, harnesses, bags, luggage, and other specialized uses.

In some embodiments, as an example, the present technology provides a textile assembly, such as a running vest. The vest can include a woven substrate coupled to an interior surface. A continuous deposition of polymer material can be applied to the woven substrate to form an abrasion resistant polymer layer, wherein a first portion of the continuous deposition of polymer material positioned at least partially across the thickness of the woven substrate. A second portion of the continuous deposition of polymer material extends from the first portion and fixedly engages at least the second exterior surface of the woven substrate. The second portion of the continuous deposition of polymer material is raised and extends outwardly away from the woven substrate.

In some embodiments, the thickness of the woven substrate can be a first thickness, and the second portion of the continuous deposition of polymer material is integrally connected first and second segments, wherein the first segment has a second thickness of the polymer material and the second segment has a third thickness different than the second thickness. The third thickness can be greater than the second thickness. The second portion of the continuous deposition of polymer material can have a varying thickness along a length of the second portion. The thickness of the woven substrate can be a first thickness, and at least a segment of the first portion of the continuous deposition of polymer material has a second thickness substantially equal to the first thickness of the woven substrate.

Disclosed are example garments and gear worn by individuals for carrying and distributing load. Each of the example garments and gear comprises a patterned filament overlay. For purposes of this disclosure, a "patterned filament overlay" (PFO) refers to a series or layout of individual and distinct threads or lines of a polymer material deposited onto an underlying substrate, such as a textile, fabric or other panel of material. In contrast to a single film or sheet deposited or laminated upon a substrate, the individual distinct threads or lines of polymer material are extruded from a nozzle as at least one of the substrate and the nozzle moved relative to one another in at least one dimension. The individual distinct threads or lines of polymer material may cross one another, may be stacked upon one another, or may extend in a side-by-side or non-overlapping path.

In some of the disclosed implementations, the pattern filament overlay comprises a single polymer filament or line having segments along its length that cross one another at least five times or having at least five segments that extend parallel to one another or that extend in a side-by side fashion to one another. In some of the disclosed implementations, the individual polymer filament or line may have a diameter within the range of 0.1 to 10 mm. In other implementations, the diameter can be within the range of 0.2 to 2 mm. In some implementations, the diameter or width of the polymer film and or line may vary along the length of the polymer filament or line; different segments of the line may have different widths or diameters. For example, the rate at which an extrusion nozzle and the underlying substrate or moved relative to one another or the rate at which the polymer is extruded may be controlled to vary the with our diameter of the polymer filament or line forming the patterned filament overlay. For purposes of the disclosure, the use of the term "line" does not necessarily mean the line follows a linear path; a "line" may extend along a path that is curved, zigzagged or linear.

The individual and distinct threads or lines (filaments) of polymer material may be patterned in a layout that enhances multiple properties of the garment or gear. For example, the patterned filament overlay may provide varying degrees of cushioning at particular locations. The patterned filament overlay may provide varying degrees of abrasion resistance for particular exterior portions of the garment or gear. The patterned filament overlay may provide varying degrees of rigidity and/or structural strength at selected locations. The patterned filament overlay may provide varying degrees of breathability for selected portions of the garment or gear.

These various properties provided by the patterned filament overlay may be adjusted by varying attributes of the patterned filament overlay in different zones. The attributes of the patterned filament overlay may be varied amongst different zones so as to accommodate different performance requirements of different zones as well as different stress and abrasion levels associated with different zones.

The at least one varying attribute may comprise one or more attributes selected from a group of attributes consisting of layout, thickness, density, penetration and layering. Layout refers to the discontinuity pattern of the polymer layer. For example, a first layout may have intersecting polymer lines that cross or intersect one another in a first manner while a second layout may have intersecting polymer lines that intersect or cross one another in a second different manner. A third layout may have non-intersecting polymer lines (lines that do not cross one another) or polymer lines that connect to one another without crossing one another. Different polymer lines of different layouts may have different line widths or different path shapes (zigzag paths, wavy or curved paths, or polygon paths).

Thickness refers to the thickness of the patterned filament overlay, the height of the patterned filament overlay. In contrast to "penetration", the height or thickness is independent of the degree of penetration, including those portions that extend below the outer surface of the underlying upper panel as well as those portions that rise above the outer surface of the underlying upper panel. A first zone may have a patterned filament overlay having a first thickness while a second different zone may have a second thickness different than the first thickness. In some implementations, the extent of penetration of a portion of the patterned filament overlay may be uniform while the thickness changes to provide enhanced abrasion resistance in particular regions and greater flexibility in other particular regions.

Density refers to the degree to which the patterned filament overlay covers the outer surface of the underlying panel of the upper. The larger the number of openings and/or the greater number of openings in the patterned filament overlay, the lower the density of the patterned filament overlay. Density may be in terms of a percentage of a surface area of a zone or portion of a zone of the upper covered by the polymer material of the patterned filament overlay (not including the openings in the patterned filament overlay where the polymer layer does not cover the underlying panel).

Penetration refers to the degree to which the polymer layer penetrates an underlying panel or panels of the upper. For example, the substrate upon with the PFO is deposited may be formed from a grid, textile or fabric having openings or voids into which the polymer material of the polymer layer may soak or penetrate prior to hardening (solidification or curing). The degree to which the polymer layer penetrates the underlying panel and extends below the outer surface of the underlying panel may be varied from one zone to another. In some implementations, at least portions of the polymer layer may penetrate the underlying panel without rising above the outer surface of the underlying panel; the outer surfaces of the portions of the polymer layer being flush or level with the outer surface of the underlying panel or below the outer surface of the underlying panel. In some implementations, the patterned filament overlay is formed by extruding or ejecting a fluid polymer material onto the underlying panel using one or more nozzles, wherein the spacing between the nozzles and the underlying panel (in some implementations, the z-axis height of the nozzle tip of nozzle 28 of extruder 26 (described above) above the underlying panel, the base textile 38), the viscosity of the polymer material, the absorptivity characteristics of the underlying panel and/or the pressure at which the polymer material is extruded/ejected may be controllably varied to control the degree of penetration of the patterned filament overlay with respect to the underlying panel or panels.

In some implementations, the penetration depth of the patterned filament overlay may gradually and uniformly change. In some implementations, the penetration depth of the patterned filament overlay, formed by the polymer material, may change in a stepwise manner. In some implementations, the penetration depth of the patterned filament overlay may be characterized by spaced apart dives, where the point at which the layers dive deeper into the underlying panel of the upper establish a series of spaced panel penetrating anchors to secure the patterned filament overlay. At the end of a deposition path, the nozzle can be gradually lowered to taper the printed feature. This reduces stress concentrations, improves adhesion, and enhances durability in flexing and abrasion-prone areas. Depositing material along cut edges can fuse fibers and create sealed boundaries. This may be performed before or after cutting the textile, resulting in clean, fray-resistant edges.

Layering refers to the number or way in which polymer lines are extruded or deposited on top of one another to form the patterned filament overlay. For example, the first set of polymer lines may be extruded onto an underlying panel of an upper and a second set of polymer lines may then be extruded onto or on top of the provide the patterned filament overlay with a greater height. This additional height may be achieved by depositing polymer lines directly on top of one another or by crisscrossing the polymer lines with the second polymer line bridging over the portions of the first polymer lines. Such layering may be a function of the layout and may impact the density of the patterned filament overlay.

In some implementations, the overlying second polymer lines may be deposited or ejected while the polymer material is added at a temperature sufficiently high to melt the underlying polymer material (when the underlying polymer lines are thermoplastic), causing the first polymer lines and the second polymer lines to fuse. In some implementations, the first and second lines and/or the overlying second polymer lines may be deposited or ejected onto the first underlying polymer lines while the first underlying polymer lines have not yet solidified or cured, permitting the first second polymer lines to fuse or blend. In some implementations, the first and second polymer lines may be formed from the same polymer or have the same base polymer. In some implementations, the first and second polymer lines may be formed from different polymers. The first and second polymer lines may have different line widths and/or different heights.

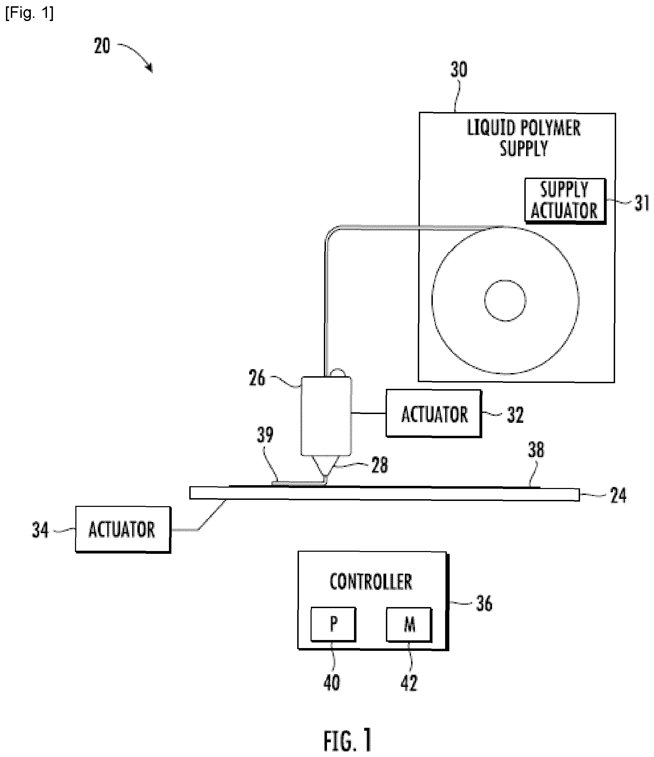

Figure 1 is a diagram schematically illustrating portions of an example fused filament fabrication system 20 comprising a print bed 24, a thermoplastic material applicator in the form of an extruder 26 having nozzle 28, a polymer supply 30, an extruder position actuator 32, print bed actuator 34 and controller 36. Print bed 24 supports a base textile 38 upon which a fluid or liquid (i.e., flowable) polymer material 39 is deposited. Extruder 26 controllably ejects and deposits the polymer through the nozzle 28 onto the base textile 38. In the example illustrated, extruder 26 provides dynamic flow of the polymer to dynamically control or vary line widths or path widths. In some implementations, the nozzle 28 has a controllably adjustable opening size such that the line width may be dynamically varied as the polymer 39 is being deposited. The nozzle 28 in other embodiments can be of various cross-sectional shapes e.g., round, oval, cross, or other specific nozzle geometries configured to tailor deposition profiles of the liquid polymer. Specific nozzle geometries may also facilitate direct bonding of textile to molded components, such as running vests, harnesses and ski pants.

As used herein, "textile" and "film" may be used interchangeably to refer to substrate material or superstrate that functions as a flexible plane. Examples of these materials are knits, wovens, non-wovens, extruded films, blown films, which can be formed from various types of yarns, including natural and high-performance yarns. The materials may have traditional textile structures, such as jersey knits or plain weaves, or more complex structures including but not limited to 3D spacer meshes, warp knits, or leno weaves. These materials may also go through secondary processing such as die cutting, texturing, foaming, flocking, laser cutting, die cutting or burnouts to change performance, appearance, or to provide variability in texture, or 3D volume.

As used herein, "polymer" may be used to refer to any thermoset, or thermoplastic polymer or other material that can be modified to become liquid or have a viscosity change through heating, chemical reaction, or dissolved in solution. In the example illustrated, system 20 comprises a fused filament fabrication (FFF) system wherein polymer supply 30 comprises a filament spool about which is wrapped a filament of thermoplastic material, such as a thermoplastic polyurethane (TPU). The filament is supplied (under the control of a supply actuator 31) to the extruder 26 which heats the filament to a temperature above its melting point and adjustably ejects the fluid thermoplastic material onto the base textile. The rate at which the fluid is ejected through the nozzle or the rate at which the filament is supplied to the extruder 26 is controllably adjustable. In some implementations, the filament may simply be pulled from a freely rotating spool, wherein the supply actuator may be omitted. In other implementations, the polymer supply 30 may comprise a container containing a polymer which flows to the extruder/applicator 26 for deposition on the base textile. In other implementations, polymer may comprise other forms or types of thermoplastic polymers or may comprise a thermoset polymer.

In some implementations, the textile 38 and the polymer 39 are compatible or have similar compositions to enhance bonding of the polymer 39 to the textile 38. For example, in some implementations, such as where the polymer 39 comprises a TPU, the textile 38 may comprise a TPU fabric, fabric having TPU extruded yarns that are woven or knit into the fabric. In some implementations, the textile 38 may comprise multi core yarns having TPU, facilitating use of nylon or other aramid fibers to provide desired tenacity. The TPU assists with abrasion and bonding. Because compatibility or similar chemical composition/chemistry as between textile 38 and the polymer 39, recycling or circularity is facilitated.

The polymer 39 (supplied to extruder 26 as a liquid or supplied as a filament that is then heated or otherwise changed to a liquid state) may have a variety of different harnesses and properties. In some implementations polymer feedstock may be formulated with additives to influence mechanical or aesthetic properties. Foaming agents may be included to expand the polymer during extrusion to create, for example, low-density, high-cushion features. In some implementations, the extent or degree of foaming of the polymer may be dependent upon a foaming agent and upon the temperature at which the polymer is ejected or extruded. As result, the temperature at which the polymer is extruded by extruder 26 may be varied or controlled to dynamically control the extent of foaming so as to dynamically control the dimensions or thickness of the polymer 39 on or within textile 38 and/or control the hardness of the deposited polymer 39. One example of such a foaming polymer is a foaming thermoplastic polymer. One example of such a foaming polymer is a foaming polymer in the form of a filament that is to be to the liquid state prior to extrusion or deposition. One example of such a foaming thermoplastic filament is FILAFLEX FOAMY ^{™} commercially available from RECREUS ^{™}. In some embodiments, the system may alternate between different polymer feedstocks (of varying hardness or composition) using multi-nozzle heads, material changes, or platform transfers. This allows hybridization for zoned protection, comfort, or visual effect.

Various methods may be utilized to bond the polymer 39 to the textile 38. As discussed above, some implementations, such bonding may be facilitated through surface bonding, where the polymer 39 and at least portions of the textile 38 have similar chemistry to facilitate chemical bonding or fusing. In yet other implementations, such bonding may be further facilitated or alternatively facilitated through the use of mechanical bonding. Examples of mechanical bonding include fiber entanglement and mesh flocking. Fiber entanglement involves fraying of the textile to isolate, separate or expose individual yarns from the remaining textile, wherein the isolated yarns are then encapsulated by the polymer 39. Mesh locking involves printing the polymer through the textile 38 such as using a Z-dip where the nozzle 28 is lowered into or through the textile 38 or where the textile 38 is raised to position the nozzle 28 through or into the textile 38.

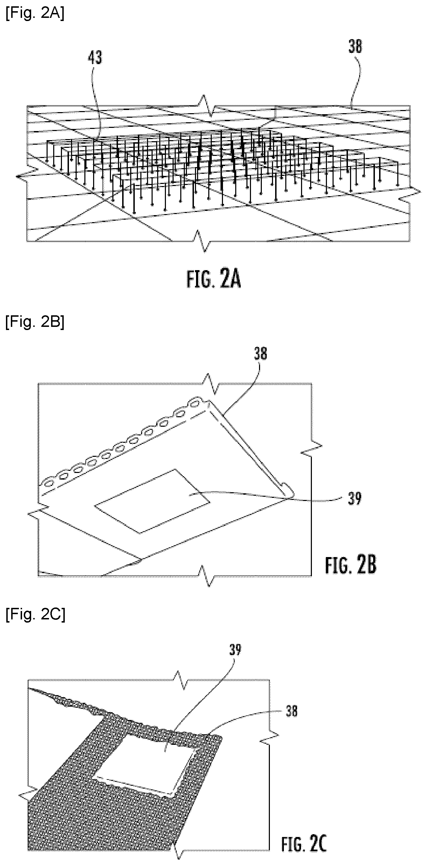

The polymer deposition can be configured to join multiple textile layers. Figures 2A-2C illustrate examples of mechanical locking. Figure 2A illustrates the path 43 of nozzle 28 through and within the textile 38 along the Z-axis for such Z-dip mechanical locking (the blue indicating a blip in the polymer flow). In some implementations, polymer may deposit between two layers of the textile 38. In yet other implementations, primers or bonding agents may be applied to the textile for enhanced bonding between the polymer 39 and the textile 38.

Extrusion position actuator 32 comprises one or more steppers, stepper motors or other actuation devices for moving extruder 26 in the X axis and Y axes directions (horizontal directions in the figure), and in some implementations, in the axis direction (towards and away from the print bed 24. Print bed position actuator 34 comprises one or more stepper motors, hydraulics, pneumatics or other devices configured to move the print bed (and carried base textile 38) n the X axis and Y axes directions (horizontal directions in the figure), and in some implementations, in the Z axis direction (towards and away from the extruder/applicator 26. In some implementations, one of the extrusion position actuator 32 and the print bed position actuator 34 may be omitted wherein either the print bed 24 or the extruder 26 is stationary while the other of the print bed or the extruder 26 is movable in three dimensions.

Controller 36 comprises a processing unit 4 and non-transitory computer-readable medium 42 containing instructions for directing the processing unit to output control signals controlling one or more of the supply of thermoplastic material to extruder 26, the positioning of extruder 26 by extrusion position actuator 32 and the positioning of the print bed 24 by the print bed position actuator 34. In some implementations, controller 36 may follow one or stored programs for controlling the supply of the base textile to the print bed, for controlling what particular thermoplastic materials being supplied to extruder 26, and for controlling the rate at which materials deposited upon the base textile and the locations on the base textile or within (encapsulating) the base textile to which the thermoplastic material is applied or deposited. The thermoplastic material 39 subsequently cools to a solidified state on or within the base textile 38. In implementations where the polymer comprise a thermoset polymer material, the thermoset polymer material cross-links or cures while on or within the textile 38.

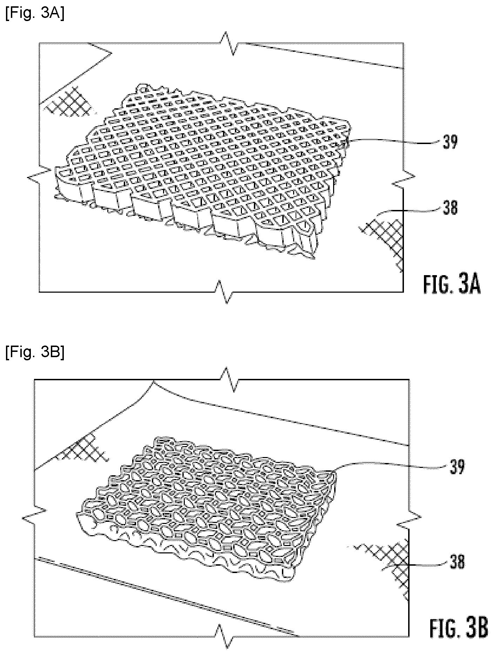

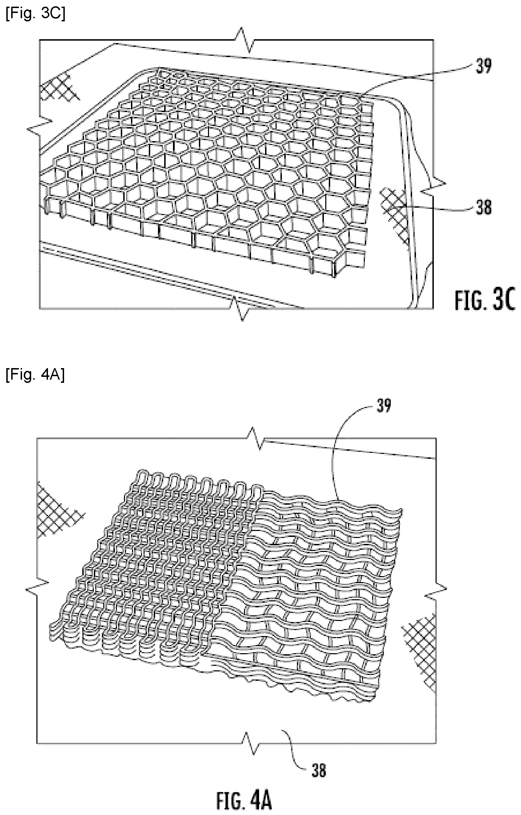

In some implementations, the instructions contained in medium 42 may direct processor 40 to output control signals causing actuators 32 and/or 34 to deposit the polymer 39 on textile 38 in a three-dimensional pattern so as to form a cushion. Particular applications the cushion may be utilized in the upper of a piece of footwear (shoe) or in some implementations, the sole of the footwear. Figure 3A-3C illustrate examples of different cushion structures formed by different printed patterns of polymer 39 on a textile 38. Each of the various architectures, layouts or patterns of polymer deposited upon an underlying fabric or textile as described hereafter may be utilized as part of a piece of footwear or shoe.

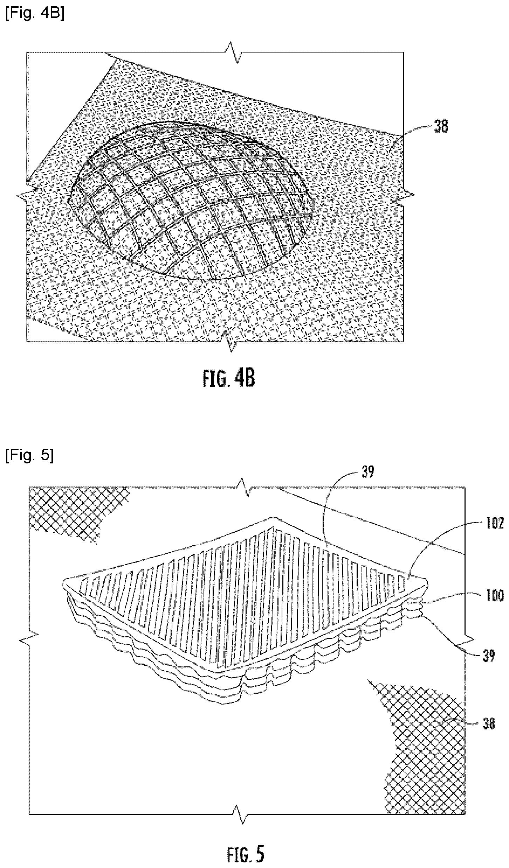

One or more deposition paths can be layered in aligned, offset, or intersecting patterns to form tunable cushioning zones with defined hardness, elasticity, and shear resistance. As shown by Figure 4A, the pattern of polymer 39 across the textile 38 may be varied to provide varying cushioning qualities/performance in a single integral unitary body of polymeric material 39. As shown by Figure 4B, the three-dimensional grid or pattern polymer 39 may be sandwiched between a pair of textile layers 38. In some implementations, the bonding between the two layers of textile 38 may be through chemical bonding or fusing, wherein the polymer is deposited upon a first layer and wherein the overlying second layer is positioned on the printed layer before the polymer 39 has solidified. In some implementations, the second overlying layer of textile 38 may be positioned over the printed layer of polymer 39 after such solidification, but where a second layer of polymer 39 is deposited/printed over the second overlying layer of textile 38 such that the second layer of polymer fuses to the previously printed layer of polymer and encapsulates the second overlying layer of textile 38.

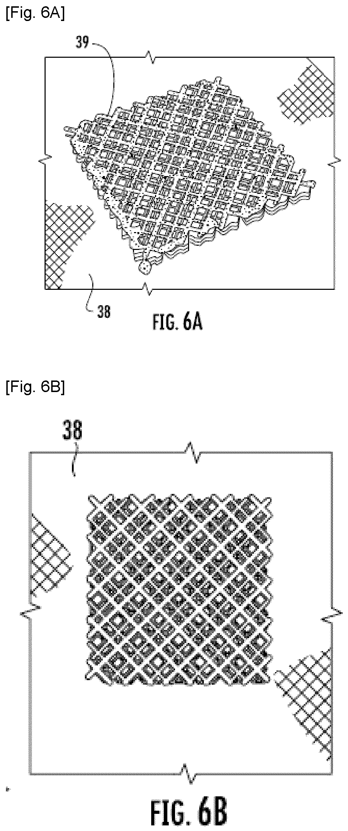

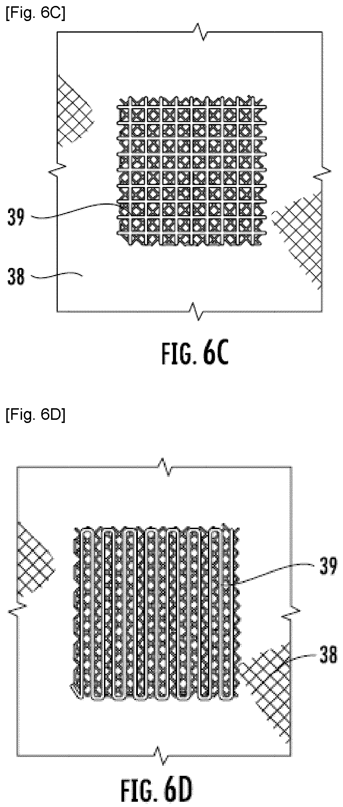

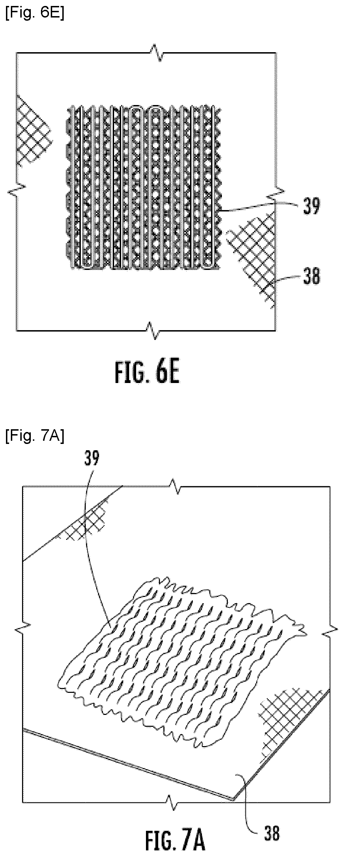

Printed geometries may be tailored to modify stretch, flex, or shear properties of the underlying textile. Lockout zones, anisotropic stiffness, or dynamic response profiles can also be created. As shown by Figure 5, the polymer 39 may be deposited in a pattern wherein an open celled three-dimensional structure 100 is formed on textile 38 and wherein a less perforate or imperforate protective layer 102 of the polymer 39 is printed or formed over 100. Such a configuration provides a protective surface over the soft cushioning. This configuration may be formed as a single integral unitary body of the polymer 39 in a single deposition flow process. In other implementations, the structure 100 may first be formed followed by forming of the protective layer 102 which is applied at a temperature so as to fused to the underlying structure 100. As shown by Figures 6A-6E, controller 36 causes applicator 26 to form different patterns or three-dimensional lattices of polymer 39 on textile 38, wherein the different patterns may offer different characteristics such as different flexibility or stretching characteristics for polymer layer as well as the underlying textile 38. Particular layers or patterns may protect the underlying layers or patterns.

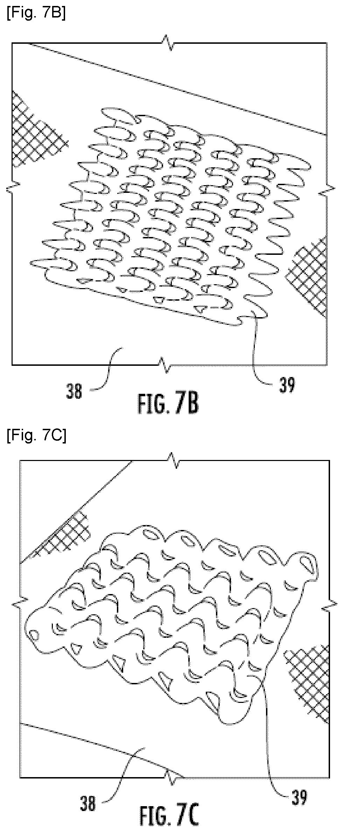

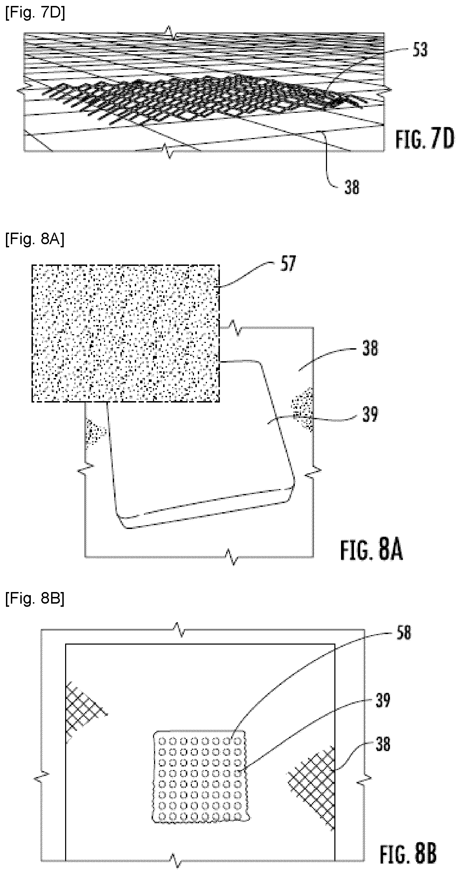

Intentional Z-axis movement during deposition can produce textured surfaces, which can provide for example, improved grip, flexibility, or aesthetic effect not achievable via planar printing. Post-deposition surface shaping may be achieved using heated texture plates that remelt the polymer surface to impart 3D textures, patterns, or branding elements. In some implementations, controller 36 may output control signals causing applicator 26 to form various textures on textile 38 with the polymer 39. Figure 7A illustrates an example tool path 53 for the nozzle controlled by the actuators of system 20 to form such textures. Figures 7A-7C illustrate examples of textures formed by polymer 39 on textile 38. Such textures are formed by controlling not only the X-Y direction of nozzle 28 (and/or print bed 24), but the Z-axis positioning of nozzle 28 (and/or print bed 24). Flow may also be controlled by controller 36 to provided such surface textures.

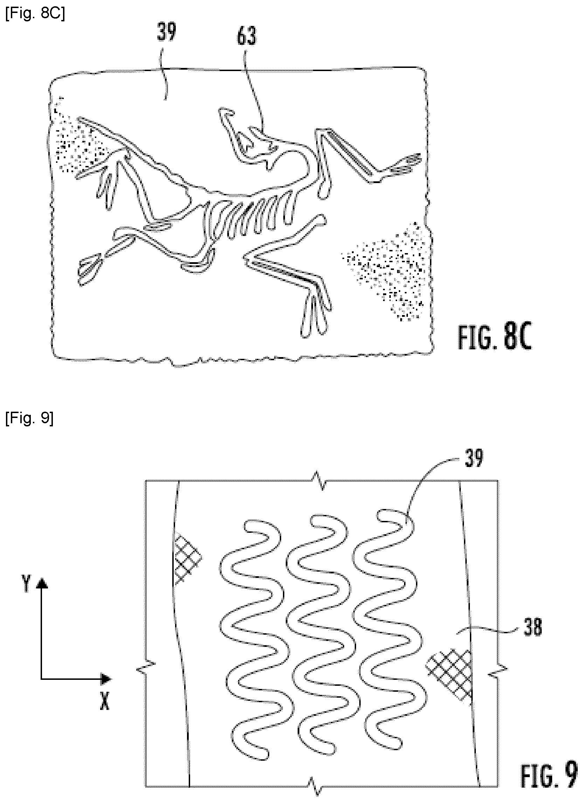

As shown by Figure 8A, in some implementations, while the polymer is in a liquid state or impressionable state, an overlying plate 57 may be pressed against the printed polymer 39 (second polymer between the textile 38 and the embossing plate, to form a texture which may be a surface texture (a roughened or dimpled surface, matching that of plate 57) or a design, graphic or logo. In some implementations, the polymer 39 may be injected through and across the textile 38 and into contact with the underlying texture/embossing plate which provides the texture, design, graphic or logo. Examples of such textures, patterns or logos are shown in Figure 8A-8C. Figure 8B illustrates an embossed pattern 58 in the ejection polymer 39 on textile 38. Figure 8C illustrates embossment of a logo or other graphic image 63 onto the polymer (prior to solidification or curing of the polymer) deposited upon the textile 38.

As shown by Figure 9, controller 36 may be configured to output control signals causing applicator 26 to apply polymer 39 in a wavy like pattern upon textile 38. The polymer 39 may have an elastic property to adjust the elastic properties of the underlying textile 38. As result, the set of wavy lines of polymer 39 provide for stretching or elasticity Y-axis direction (the wavy lines straightening out during such stretch of fabric 38 in the Y-axis direction) but resist stretching in the X-axis direction.

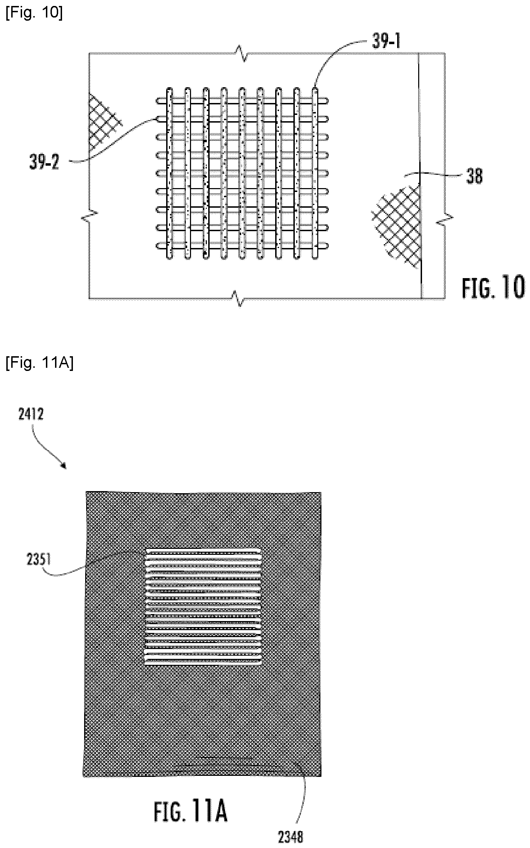

Figure 10 illustrates an example of the first polymer 39-1 deposited in the Y-axis direction and a second different polymer 39-2 deposited in the ex-axis direction. The different polymers 39-1 and 39-2 may have different physical properties to modify the overall properties of the textile 38 in the X and Y axis directions.

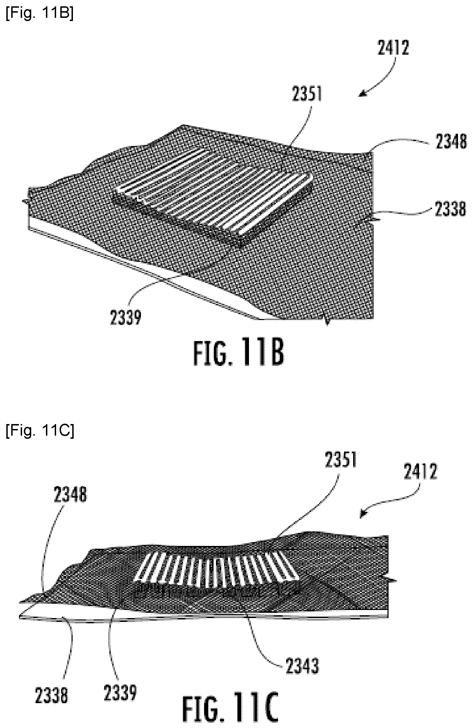

In some embodiments, polymer deposition can be configured to join multiple textile layers by depositing polymer between them or around embedded structures, forming a composite material or 3D bonded textile assembly. For example, Figures 11A-11C illustrate portions of an example spacer/cushion construction 2412. Construction 2412 is similar to construction 2312 except that, as shown in Figure 11B and 11C, lattice 2339 has a varying height across at least one length and/or width dimension. In the example illustrated, lattice 2339 has a lower height and a central portion 2343 providing lattice 2339 with an upwardly concave profile. In the example illustrated, cover polymer 2351 has a uniform thickness or height such as the outer profile of construction 2412 has a corresponding concave profile or curvature. In some implementations, polymer 2351 may have a nonuniform height or thickness in at least one dimension to amplify any outer profile curvature or to render the outer profile as being substantially flat or planar.

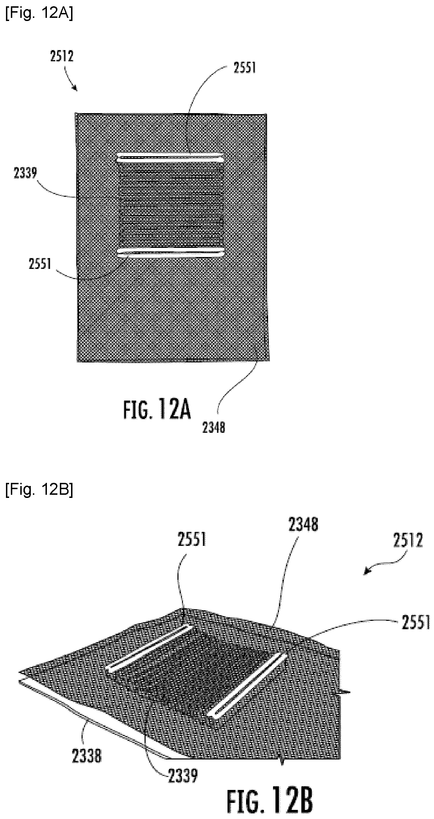

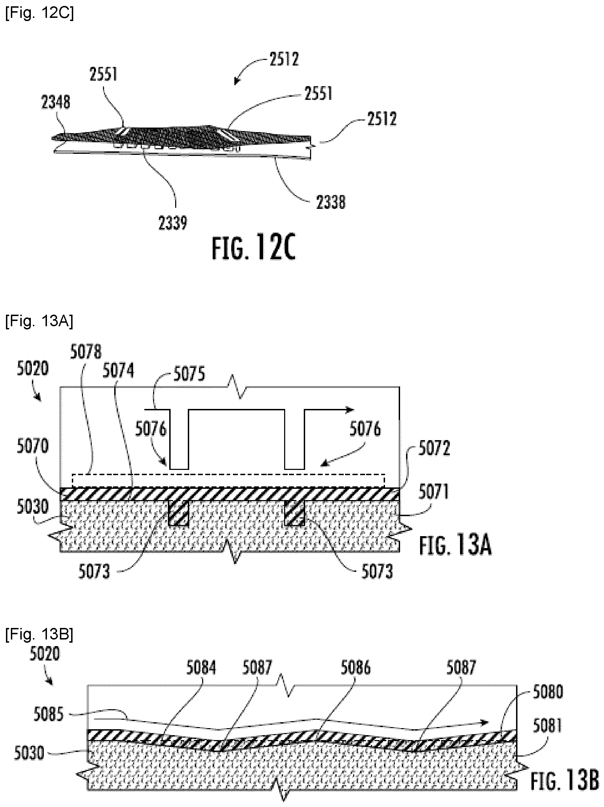

Figures 12A-12C illustrates portions of an example spacer/cushion construction 2512. Construction 2512 is similar to construction 2412 except that construction 2512 comprises cover polymer 2551 in place of cover polymer 2351. Cover polymer 2551 comprises a polymer, deposited while in a liquid form and subsequently solidified or cured. Cover polymer 2551 is deposited on cover textile 2348 at two spaced locations over lattice 2339, penetrating textile 2348 and bonding or fusing to the underlying portions of lattice 2339 at the spaced locations. In the example illustrated, color polymer 2551 comprises a pair of polymer lines or bars deposited on and connected to opposite ends of lattice 2339. As shown by Figure 40C, cover polymer 2551 anchors two spaced portions of cover textile 2348 so as to stretch cover textile 2348 over and above (and out of contact with) the underlying concave top surface of lattice 2339. As result, the construction 2512 offers a surface texture defined largely by textile 2348 while providing airflow between textile 2348 and the underlying top surface of lattice 2339. As with cover polymer 2351, cover polymer 2551 may form from a polymer that is compatible with or the same as the polymer forming lattice 2339 or at least those portions of lattice 2339 underlying and making contact with cover polymer 2551. In some implementations, cover polymer 2551 and lattice 2339 are formed from a TPU polymer. In some implementations, one or both of the surfaces of textile 2348 have a compatible polymer coating or film, such as a TPU coating or film to further enhance bonding. In the example illustrated, cover polymer 2551 penetrates and extends through textile 2348 two joined to lattice 2339 to form a mechanical lock with respect to textile 2348. In other implementations, cover polymer 2551 may not penetrate textile 2348, wherein lattice 2339 is secured to portions of textile 2338 and wherein the upper face of textile 2340 is secured to cover polymer 2551. In such implementations, cover polymer 2551 may serve as a stiffener. In the example illustrated, lattice 2339 is formed by a series of parallel lines (as seen in Figure 40A), permitting the construction to bend or flex about axes that are parallel to such lines. As should be appreciated, lattice 2339 may have a variety of other patterns, shapes or geometries. As noted above, textiles 2338 and 2348 may comprise different textiles having different performance characteristics. In some implementations, textile 2338 and 2348 may be the same type of textile having the same characteristics.

Each of the above-described spacers/cushions may be used in a variety of applications. For example, each of the above-described spaces/cushions may be employed at particular locations of a garment gear worn by a person where the garment or gear are pressed against the anatomy of the person. For example, each of the spacer/cushions may be employed allocations where portions of the garment or gear bear against the top of the shoulders of a person wearing the garment or gear. Each of the spacer/cushions may likewise be employed in regions of a garment or gear that bear against the waist of a person. In still other implementations, each of the spacer/cushion be employed in other regions of a garment or gear. Each of such spacer/cushion may be employed in other articles of clothing, garments or other structures.

Figure 13A is a sectional view illustrating portions of an example extruded polymer line 5070 that forms a portion of patterned filament overlay 5034 and that has been extruded or ejected onto the underlying panel 5071 of upper 5030, such using the extruder 26 of fabrication system 20 described above. Line 5070 may be provided in any of the above describe zones of shoe 5020 or in other zones of upper 5030. Line 5070 comprises a surface portion 5072 and a series of spaced panel penetrating anchors 5073.

Surface portion 5072 extends along the outer surface of panel 5071, rising above the outer surface of panel 5071. In the illustrated example, surface portion 5072 does not penetrate the surface of panel 5031.

Anchors 5073 project from orifice portion 5072 and penetrate panel 5071, extending from surface portion 5072 below surface 5074 of panel 5071. Anchors 5073 may be formed by lowering the nozzle 28 into closer proximity to surface 5074 during the ejection of the polymer material, increasing the pressure at which the polymer material is being ejected and/or lowering the viscosity of the polymer material being ejected such that the ejected polymer penetrates surface 5074 at the illustrated space locations. In one implementation, the nozzle 28 is moved along the illustrated path 5075, the nozzle being temporarily lowered at locations 5076 towards surface 5074, diving or dipping towards surface 5074 during ejection of polymer material, followed by vertical lifting of nozzle 28 away from surface 5074 and translation of nozzle 28 across surface 5074 to the next location 5076.

Solidification of the polymer material, following penetration, provides spaced mechanical interlocks or anchors with respect to the perforate panel 5071. Anchors 5073 secure surface portion 5072 in place to inhibit separation of line 5070 from panel 5071. Because anchors 5073 are spaced, such securement is achieved with less material and less added weight to shoe 5020.

As shown by broken lines, in some implementations, an additional layer 5078 may be formed on top of surface portion 5072. In some implementations, the additional layer 5078 may comprise a polymer material and may be extruded by system 20. In some implementations, additional layer 5078 may be applied while the surface portion 5072 is in a liquid state, facilitating fusion or bonding of the layer 5078 to the surface portion 5072. In some implementations, the additional layer 5078 may be formed from the same base polymer material to facilitate fusing. In other implementations, the additional layer 5078 may be formed from a different material. In some implementations, the additional layer 5078 may be in the form of a perforate panel, such as a fabric or textile, wherein the additional layer 5078 and the surface portion 5072 are pressed towards one another while surface portion 5072 is in a liquid state such that the surface portion 5072 penetrates and impregnates the perforations of the additional layer 5078. In such implementations, curing or solidification of the surface portion 5072 results in a mechanical interlock with the perforated additional layer 5078. In yet other implementations, the additional layer 5078 may be adhesively bonded to the surface portion 5072 of line 5070.

Figure 13B is a sectional view illustrating portions of an example extruded polymer line 5080 that forms a portion of patterned filament overlay 5034 and that has been extruded or ejected onto the underlying panel 5081 of upper 5030, such using the extruder 26 of fabrication system 20 described above. Line 5080 may be provided in any of the above describe zones of shoe 5020 or in other zones of upper 5030. Line 5080 comprises a line of extruded polymer material resulting from the movement of the nozzle 28 along the path 5085, wherein the nozzle 28 is gradually raised and lowered relative to the outer surface 5084. Line 5080 gradually transitions between different first portions 5086 reside completely above surface 5084 and second portions 5087 having a majority or all of the thickness of such portions at or below surface 5084. In contrast to line 5070 which provides distinct spaced anchor points, line 5080 is anchored to panel 5081 across a larger area of surface 5084, wherein portions of surface 5084 (corresponding to portion 5087) coincide with the outermost surface of upper 5030. In contrast to line 5070, line 5080 undulates along the surface 5084.

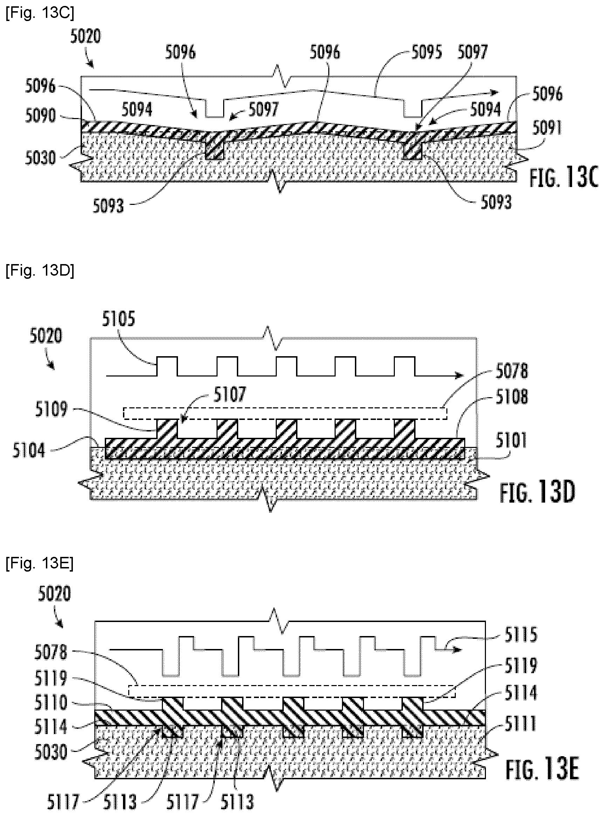

Figure 13C is a sectional view illustrating portions of an example extruded polymer line 5090 that forms a portion of patterned filament overlay 5034 and that has been extruded or ejected onto the underlying panel 5091 of upper 5030, such using the extruder 26 of fabrication system 20 described above. Line 5090 may be provided in any of the above describe zones of shoe 5020 or in other zones of upper 5030. Line 5090 comprises a line of extruded polymer material resulting from the movement of the nozzle 28 along the path 5095, wherein the nozzle 28 is gradually raised and lowered relative to the outer surface 5094 (similar to the extrusion of line 5080) and is abruptly plunged towards surface 5094 at locations the 96 and subsequently vertically raised to form the more deeply penetrating anchors 5093 at spaced locations. Similar to line 5080, line 5090 gradually transitions between different first portions 5096 which reside completely above surface 5094 and second portions 5097, wherein a majority or all of the thickness of such portions are at or below surface 5094. Line 5090 provides gradual anchoring while at the same time provides even more secure deeper anchors 5093 at spaced locations.

Figure 13D is a sectional view illustrating portions of an example extruded polymer line 5100 that forms a portion of patterned filament overlay 5034 and that has been extruded or ejected onto the underlying panel 5101 of upper 5030, such using the extruder 26 of fabrication system 20 described above. Line 5100 may be provided in any of the above describe zones of shoe 5020 or in other zones of upper 5030. Line 5100 comprises a line of extruded polymer material resulting from the movement of the nozzle 28 along the path 5105 polymer material, wherein the nozzle 28 is initially lowered such that the extruded polymer material penetrates the surface 5104 of panel 5101 (mechanically interlocking with the perforated material of panel 5101) while also projecting up partially above the surface 5104 along the entire length of line 5100 for abrasion resistance. At particular locations 5107, the nozzle 28 is raised during extrusion and then subsequently lowered before being translated to the next location 5107. This results in line 5100 being provided with posts or pillars 5109 that rise further above those portions of line 5100 projecting above surface 5104. Such pillars 509 may provide additional knobs or protuberances for abrasion resistance at spaced locations along line 5100.

As shown by broken lines, in some implementations, an additional layer 5078 may be formed on top of pillars 5109. In some implementations, the additional layer 5078 may comprise a polymer material and may be extruded by system 20. In some implementations, additional layer 5078 may be applied while the pillars 5109 are in a liquid state, facilitating fusion or bonding of the layer 5078 to the pillars 5109. In some implementations, the additional layer 5078 may be formed from the same base polymer material as line 5100 to facilitate fusing. In other implementations, the additional layer 5078 may be formed from a different material.

In some implementations, the additional layer 5078 may be in the form of a perforate panel, such as a fabric or textile, wherein the additional layer 5078 and the pillars 5109 are pressed towards one another while pillars 5109 is in a liquid state such that the pillars 5109 penetrates and impregnate the perforations of the additional layer 5078. In such implementations, curing or solidification of the polymer material of pillars 5109 results in a mechanical interlock with the perforated additional layer 5078. In yet other implementations, the additional layer 5078 may be adhesively bonded to the pillars 5109 of line 5070. In some implementations, the pillars 509 create a voyeur space between the additional layer 5078 and line 5100. In implementations where the polymer material is flexible or elastic, pillars 5109, alone or in combination with layer 5078, may offer enhanced cushioning for those zones in which line 5100 is formed.

Figure 13E is a sectional view illustrating portions of an example extruded polymer line 5110 that forms a portion of patterned filament overlay 5034 and that has been extruded or ejected onto the underlying panel 5111 of upper 5030, such using the extruder 26 of fabrication system 20 described above. Line 5110 may be provided in any of the above describe zones of shoe 5020 or in other zones of upper 5030.

Line 5110 comprises a line of extruded polymer material resulting from the movement of the nozzle 28 along the path 5115 polymer material, wherein the nozzle 28 is translated above the outermost surface 5114 of panel 5111 such that the extruded polymer material extends along and does not penetrate the surface 5114 of panel 5111. At particular locations 5117, the nozzle 28 is initially lowered or plunged towards surface 5114 during extrusion to form an anchor 5113 and raised (without substantial translation along surface 5114) during extrusion to form a pillar 5119 substantially aligned with and vertically above the underlying anchor 5113. After both the corresponding or aligned anchors 5113 and 5119 are formed, the nozzle is translated of longer across surface 5114 to the next location 5117 to form the next corresponding pairs of anchors and pillars. This process is repeated along the length of line 5110.

As with anchors 5073 and 5093, anchors 5113 provide discrete or distinct anchor points that form mechanical interlock with the underlying panel 5111 to robustly secure the remainder of line 5110. As with pillars 5109, pillars 5119 rise above the remainder of line 5110 (those portions of line 5110 between pillars 5119) may be provided with additional knobs or protuberances for abrasion resistance at spaced locations along line 5100. As with line 5100, an additional layer 5078 may be provided on top of pillars 5109 (see discussion of layer 5078 with respect to pillars 5109).

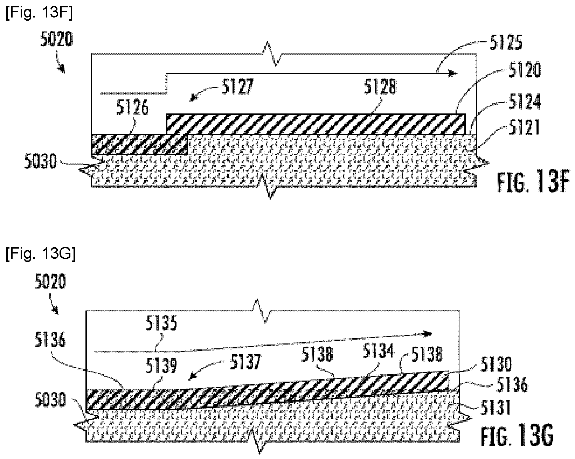

Figure 13F is a sectional view illustrating portions of an example extruded polymer line 5120 that forms a portion of patterned filament overlay 5034 and that has been extruded or ejected onto the underlying panel 5121 of upper 5030, such using the extruder 26 of fabrication system 20 described above. Line 5120 may be provided in any of the above describe zones of shoe 5020 or in other zones of upper 5030. Line 5120 comprises a line of extruded polymer material resulting from the movement of the nozzle 28 along the path 5125, wherein the nozzle 28 is translated at a height above the outermost surface 5124 of panel 5121 such that the extruded polymer material comprises a surface penetrating portion 5126 and, at location 5127, is raised to a height to form a surface covering portion 5128 that extends along and does not penetrate the surface 5124 of panel 5121. In some implementations, the height of nozzle 28 above surface 5124 may be lower such that portions of portion 5128 penetrate below surface 5124. Line 5120 provides a stepwise change in a degree of penetration with respect to panel 5121 to provide a stepwise change (abrasion resistance and mechanical interlocking) with respect to those portions of the patterned filament overlay 5034 formed by line 5120.

Figure 13G is a sectional view illustrating portions of an example extruded polymer line 5130 that forms a portion of patterned filament overlay 5034 and that has been extruded or ejected onto the underlying panel 5131 of upper 5030, such using the extruder 26 of fabrication system 20 described above. Line 5130 may be provided in any of the above describe zones of shoe 5020 or in other zones of upper 5030. Line 5130 comprises a line of extruded polymer material resulting from the movement of the nozzle 28 along the path 5135, wherein the nozzle 28 is initially translated along surface 5134 and at a height above surface 5134 during extrusion such that extruded polymer forming line 5130 forms a level or flush portion 5139 that is level and flush with surface 5134, at or below surface 5134. At a particular location 5137, nozzle 28 is gradually (in a sloped manner) lifted with respect to surface 5136 to form a ramped portion 5138 of line 5130. The ramped portion 5138 extends from a location completely below or flush with surface 5134 at one end to a location completely above and on top of surface 5134 at another end. The level or flush portion 5139 provides a flat or smooth and level surface for bonding additional layers or overlapping additional layers with respect to panel 5131. The ramp portion 5138 provides a gradual increase in the height of line 5130 above surface 5134 to provide enhanced abrasion resistance without abrupt changes that might otherwise create a stress point.

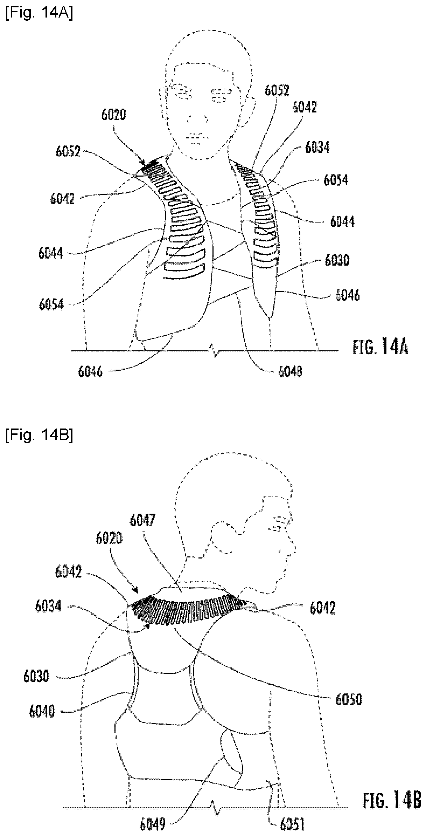

Figures 14A-17 illustrate an example garment in the form of a running vest 6020 comprising an example patterned filament overlay (PFO) 6034. Running vest 6020 comprises one or more panels 6030 forming back portion 6040, shoulder portions 6042 chest portion 6044 and abdomen portions 6046 of running vest 6020. Back portion 6040 is configured to extend along the back of the person wearing vest 6020 and up to the nape covering portion 6047 of the nape of the neck of the person wearing garment 6020. Shoulder portion 6042 extend from back portion 6040, near the nape covering portion 6047, around the neck and over a top of the shoulders. Chest portion 6044 extend downward along the front of the person wearing garment 6020, from shoulder portion 6042 across the chest or pectorals. Abdomen portions 6046 extend downwardly from chest portion 6044 towards a waste of the person wearing garment 6020.

In the example illustrated, abdomen portion 6046 are connected to back portion 6040 by side portions 6051 extending below the armpits of the person wearing garment 6020. Side portions 6051 comprise panels which are integrally formed as part of or joined to back portion 6040 and abdomen portion 6046. In other implementations, side portions 6051 may comprise cords, straps or other connection structures. Each of such portions may be formed from a single panel or multiple panels joined to one another.

In the illustrated example, chest portion 6044 and abdomen portion 6046 are connected to one another by connection lines 6048. Connection line 6048 may comprise cords, straps or bands. In some implementations, connection line 6048 may be elastic. In other implementations, connection line 6048 may be inelastic, having adjustable lengths via buckles or the like. Connection line 6048 may be permanently affixed to both left and right portions of chest portion 6044 and abdomen portion 6046 or may be releasably in nature, permitting the left and right sides of chest portion 6044 and abdomen portion 6046 to be pulled apart, away from another. For example, in some implementations, connection lines 6048 may comprise left and right portions which are releasably connectable to one another by buckles, snaps or the like. In some implementations, connection lines 6048 may have end portions that are releasably connected to either or both of the left and right portions of chest portion 6044 or abdomen portions 6046.

In still other implementations, connection line 6048 may be omitted where vest 6020 does not include a split front, where the left and right chest portions and/or the left and right abdomen portion 6046 are integrally formed as part of a single unitary chest covering formed by one or more panels. In such implementations, a head opening is formed between and defined by the single continuous chest covering, the left and right shoulder portions 6042 and the nape covering portion 6047 and wherein a person dresses with vest 6020 by passing his or her head through the opening, pulling the vest 6020 over one's head and onto the person's shoulders.

As shown by Figure 14B, running vest 6020 comprises a rear side opening pouch 6049 provided on back portion 6040. Pouch 6049 may be formed by an elastic or resiliently stretchable panel secured to back portion 6040 so as to form a side opening leading to a horizontally extending interior configured to hold weather protection garments, fluid containers or other equipment or supplies. In other implementations, running vest 6020 may comprise additional mounting or carrying equipment and/or supplies on the front or back of running vest 6020. For example, running vest 6020 may include an elastic or inelastic straps, secured at opposite ends, for the retention of equipment, supplies or other attachment mechanisms such as carabiners. Running vest 6020 may also or alternatively include top opening pouches or pockets for containing hydration containers (water bottles and the like), food/energy sources or lightweight whether garments (rain ponchos, caps and the like). Such pouches may include closure mechanisms such as hook and loop fasteners, snaps, buttons or zippers. In some implementations, running vest 6020 may further include cable or tube routing sleeves built-in the running vest 6020 for guiding electronic wires or cables or for guiding hydration tubes.

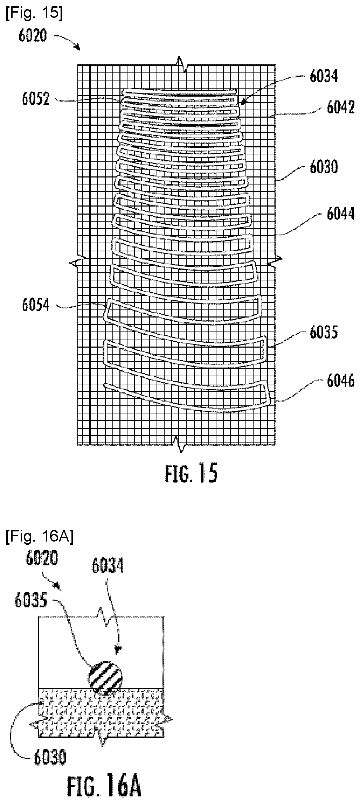

PFO 6034 comprises a single continuous polymer line, thread or filament (such terms being used interchangeably) that winds back and forth in a serpentine fashion from the nape covering portion 6047, across both the left and right shoulder portion 6042 and downwards along the front of vest 6020, across at least chest portion 6044 and potentially onto abdomen portion 6046. In some implementations, the polymer filament comprises a foamed polymer. In some implementations, the polymer filament comprises a thermoplastic polyurethane (TPU) material. Figure 15 is an enlarged view illustrating PFO 6034. The serpentine pattern of PFO 6034 provides a degree of flexibility as the undulations may spread apart under load in a direction perpendicular to the back and forth direction of the undulations.

In the example illustrated PFO 6034 has various regions with at one varying attribute amongst different zones of the running vest 6020. PFO 6034 has a first nape region 6050, second shoulder regions 6052 and front regions 6054. Nape region 6050 extends over the nape covering portion 6047 across the back of the running vest 6020 and behind the neck. Shoulder regions 6052 extend forwardly from nape region 6050 over the top of the shoulders, on shoulder portion 6042. Front portion 6054 extend downward along the front of running vest 6020, from shoulder regions 6052 on chest portion 6044 and onto abdomen portion 6046.

Regions 6050, 6052 and 6054 have a varying density to provide varying degrees of reinforcement and varying degrees of breathability. Nape region 6050 has a greater density (number of undulations per unit area) than that of shoulder regions 6052. The varying density is achieved by controlling the path of the nozzle extruding the polymer along the surface of the one or more panels of running vest 6020. Shoulder regions 6052 have a greater density than that of front regions 6054. The greater density of nape region 6050 provides enhanced reinforcement to the nape covering portion 6047 for purposes of loadbearing. The greater density of shoulder regions 6052 also provides enhanced reinforcement to shoulder portion 6042 for loadbearing. The lesser density of front regions 6050 provides greater spacing between the undulations for less reinforcement, greater flexibility and greater breathability.

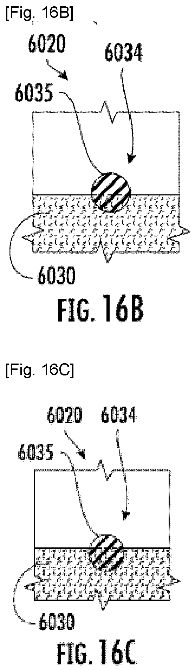

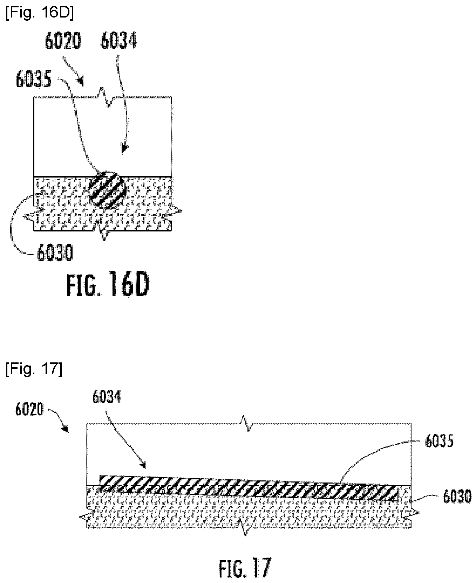

In the example illustrated, regions 6050, 6052 and 6054 also have a varying degree of penetration. Figures 16A, 16B, 16C, 16D and 17 illustrate an individual filament or line 6035 forming PFO 6034 and having various penetration depths. Region 6050 have a penetration depth similar to that shown in Figure 16D, wherein the single filament or line 6035 has a greatest penetration depth, wherein a majority of the line 6035 extends below the surface of the underlying substrate or panel 6030. The greater degree of penetration maintains the reinforcement properties while altering the surface properties to a lesser extent. The greater degree of purge penetration provides enhanced anchoring of PFO 6034 for a more robust attachment of region 6050.

Shoulder regions 6052 and front regions 6054 have a penetration profile similar to what is shown in Figure 16A-16D and Figure 17. Line 6035 transitions from the greatest penetration depth shown in Figure 16D along nape region 6050 two the smallest penetration depth of shoulder regions 6052 shown in Figure 16A. Because line 6035 in shoulder regions 6052 has the greatest height in the least amount of penetration, line 6035 in regions 6052 provides greater load cushioning. As line 6035 proceeds from shoulder regions 6052 towards and along front portion 6054, the penetration depth of line 6035 gradually increases the front as shown in Figure 16B and 16C. The gradual increase in the penetration of as it extends downwardly along the front of running vest 6020 provides enhanced anchoring or securement of line 6035 while maintaining the reinforcement properties of line 6035 in such regions.

Although line 6035 is illustrated as gradually transitioning between the various penetration depths, in other implementations, such changes in the penetration depth of line 6035 may alternatively occur in other manners or variations. In some implementations, line 6035 may have a varying penetration profile similar to that shown in any of Figures 13A, 13B, 13C or 13G discussed above. In such implementations, portions of line 6035 may be provided with anchors 5113 as discussed above.

In the illustrated example, PFO 6034 extends along the exterior running vest 6020, wherein those regions of PFO 6034 height (shoulder regions 6052) also offer a greatest degree of abrasion resistance. In other implementations, at least portions of PFO 6034 may be covered by one or more additional layers that extend on top of our over PFO 6034, concealing PFO 6034. In some implementations, PFO 6034 may additionally comprise pillars or posts 5109 or 5119 (shown and described above with respect to Figures 13D and 13E), wherein the overlying panels are supported by or are secured upon the pillars or posts.

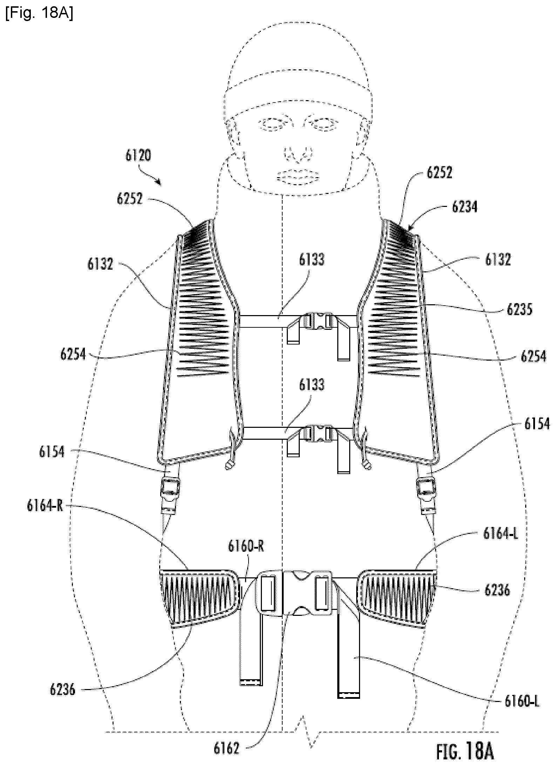

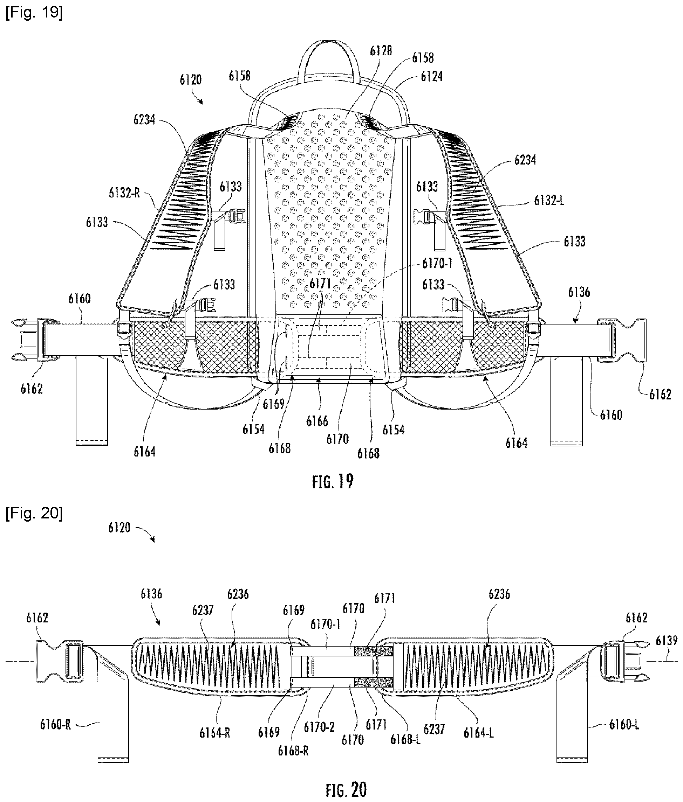

Figures 18A, 18B and 19-20 illustrate an example piece of gear or personal carrying equipment in the form of a backpack 6120 comprising example patterned filament overlays (PFOs) 6234 and 6236. Backpack 6120 comprises pack portion 6124, frame 6128 (shown in Figure 19), shoulder straps 6132-L, 6132-R (collectively referred to as shoulder straps 1632), and hip belt 6136. Pack portion 6124 is made of a flexible material, such as a canvas or the like. In some implementations, pack portion 6124 may be formed from a flexible material such as a woven textile fabric. In some implementations, the fabric may be coated and/or laminated with at least one water-repellent, water resistant, and/or waterproof material.

In the example illustrated, pack portion 1224 comprises a top opening 6146 to provide access to the internal compartment. In the example illustrated, the top opening 6146 may be closed by zipper 6147. In other implementations, top opening 6146 may be closed by a roll-top type closure or a hem-and-draw-cord type closure. In other implementations other closure mechanisms may be utilized with backpack 6120. As should be appreciated, pack portion 6124 may have a variety of different configurations, not limited to an open top backpack.

Frame 6128 (shown in Figure 19) comprises at least one rigid or semi rigid sheet or panel, wherein the sheet or panel is more rigid than the flexible material forming pack portion 6124. Frame 6128 maintains the shape of pack portion 6124 along the back of the person wearing backpack 6120. Frame 6128 further assists in transferring and distributing the load carried by backpack 6120 to the person wearing backpack 6120. Frame 6128 may be formed from materials such as plastics, composite materials, metals and the like. Frame 6128 has an appropriate thickness to exhibit sufficient strength without excessive weight. In some implementations, frame 6128 may be omitted.

Shoulder straps 6132 serve as a carrying system for backpack 6120. Each of shoulder straps 6132 has a lower end 6154 attached to pack portion 6124, and an upper end 6158 connected to frame 6128 (when provided) are connected directly to pack portion 6124. Shoulder straps 6132-L and 6132-R are releasably secured to one another along the front of the person wearing backpack 6120 by front connectors 6162 (illustrated as side release buckles). In other implementations, connectors 6162 may comprise other forms of connectors. In the example illustrated, each of shoulder straps 6132 comprises a panel 6133 which serves as a substrate for PFO's 6234.

Hip belt 6136 comprises a belt configured to wrap or extend about the waist region of the person wearing backpack 6120. Hip belt 6136 comprises front adjustment straps 6160-L, 6160-R (collectively referred to as front adjustment straps 6160), front connector 6162, and side panels 6164-L, 6164-R (collectively referred to as side panels 1806). Front adjustment straps 6160 extend from side panels 6164 to connector 6162. Front adjustment straps 6160 form a front side of belt 6136 and cooperate with connector 6162 to provide for length adjustment of belt 6136. In the example illustrated, connector 6162 comprises a side-release buckle. In other implementations, connector 6162 may comprise other forms of buckles or other forms of connectors that releasably join front adjustment straps 6164-L and 6164-R to one another along a front of the person wearing backpack 6120.

Side panels 6164 extend between front adjustment straps 6160 and angle retainer 6166. Side panels 6164 each wrap about the sides of the person wearing backpack 6120 and terminate in regions proximate to a back of the person wearing backpack 6120, forming a portion of rear side of belt 6136. Side panel 6164-L forms a left rear end portion 6168-L. Side panel 6164-R forms a right rear end portion 6168-R.

Angle retainer 6166 facilitates relative angular adjustment of side panels 6164 and their straps 6160 and retains such side panels 6164 at selected relative angles. In the example illustrated, angle retainer 6166 comprises a turn bar 6169 and connector straps 6170-1 and 6170-2 (collectively referred to as straps 6170). Turn bar 6169 comprise a strap or band having ends secured to or formed as part of rear end portion 6168-R. Turn bar 6169 provides a structure about which free ends of straps 6170 may turn and wrap to releasably connect rear end portion 6170-R to rear end portion 6170-L.

Straps 6170 extend from rear end portion 6168-L and wrap about turn bar 6169 before being releasably connected to themselves. In such an implementation, the free end 6171 of the strap 6170 may be fed through and wrapped about the turn bar 6169 to reverse in direction and to attach to itself, after passing around turn bar 6169, using two hook and loop (VELCRO ^{™}) patches 6171. By varying the extent to which the two straps 6170 turnabout the turn bars 6169 and the locations of the self-attachments, the lengths of the two straps 6170 between the end portions 6168 may be adjusted and varied to retain the side panels 6164 at any one of multiple relative angles. To accommodate people with particular iliac crests.

In other implementations, waist belt 6136 may have other configurations. In some implementations, waist belt 6136 may not offer angle adjustment. For example, waist belt 6136 may alternatively comprise a continuous belt or a continuous, uninterrupted or unbroken panel or groups of panels (without turn bar 6169 or straps 6170) providing both of side portions 6164 and passing through a sleeve coupled to frame 6128. In some implementations, side panel 6164-R may be non-releasably affixed to a right side of frame 6128 (when provided) or to the back of pack portion 6124 while side panel 6164-L is non-releasably affixed to a left side of frame 6128 (when provided) or alternatively to the back of pack portion 6124.

PFO 6234 comprises a single continuous polymer line, thread or filament (such terms being used interchangeably) 6235 that winds back and forth in a serpentine fashion in a lengthwise direction along each of shoulder straps 6132. In some implementations, the polymer filament 6235 comprises a line of a foamed polymer. In some implementations, the polymer filament comprises thermoplastic polyurethane (TPU). The serpentine pattern of PFO 6234 provides a degree of flexibility as the undulations may spread apart under load in a direction perpendicular to the back and forth direction of the undulations.

In the example illustrated PFO 6234 has various regions with at one varying attribute amongst different zones of the shoulder straps 6132. Each of PFOs 6234 has a shoulder top region 6252 and front region 6254. Shoulder top regions 6252 extend forwardly from pack portion 6124 over the top of the shoulders, on shoulder strap 6132. Front region 6254 extends downward from its respective shoulder top region 6252 towards the lower end 6154. Both of regions 6252 and 6254 extend across a majority of the width their respective portions of shoulder straps 6132. Regions 6252 and 6254 have a varying density to provide varying degrees of reinforcement and varying degrees of breathability. Regions 6252 have a greater density (number of undulations per unit area) than front regions 6254. The varying density is achieved by controlling the path of the nozzle extruding the polymer along the surface of the one or more panels of shoulder strap 6132. The greater density of shoulder top region 6252 provides enhanced reinforcement to those particular portions of the shoulder strap 6132 for loadbearing. The lesser density of front region 6254 provides greater spacing between the undulations for less reinforcement, greater flexibility and greater breathability.

In the example illustrated, regions 6252 and 6254 also have a varying degree of penetration. Shoulder regions 6252 and front regions 6254 have a penetration profile for the line 6235 similar to what is shown in Figure 16A-16D and Figure 17 for line 6035. As line 6235 proceeds downward from shoulder top regions 6252, the penetration depth of line 6235 gradually increases the front as shown in Figure 16B and 16C. The gradual increase in the penetration of as it extends downwardly along the shoulder strap 6132 provides enhanced anchoring or securement of line 6035 while maintaining the reinforcement properties of line 6235 in such regions.

Although line 6235 is described as gradually transitioning between the various penetration depths, in other implementations, such changes in the penetration depth of line 6235 may alternatively occur in other manners or variations. In some implementations, line 6235 may have a varying penetration profile similar to that shown in any of Figures 13A, 13B, 13C or 13G discussed above. In such implementations, portions of line 6235 may be provided with anchors 5113 as discussed above. In some implementations, line 6235 may be replaced with multiple lines or filaments of polymer material, the multiple lines extending end-to-end or parallel to one another. In some implementations, PFO 6234 may be formed from multiple separate lines or filaments that have been separately extruded or deposited.

In the illustrated example, PFO 6234 extends along the exterior of shoulder straps 6132 along the face of such shoulders of 6132 facing away from the person wearing backpack 6120, wherein those regions of PFO 6234 having the greatest height (shoulder top regions 6252) also offer a greatest degree of abrasion resistance. In other implementations, at least portions of PFO 6234 may be covered by one or more additional layers that extend on top of our over PFO 6034, concealing PFO 6234. In some implementations, PFO 6234 may additionally comprise pillars or posts 5109 or 5119 (shown and described above with respect to Figures 13D and 13E), wherein the overlying panels are supported by or are secured upon the pillars or posts.

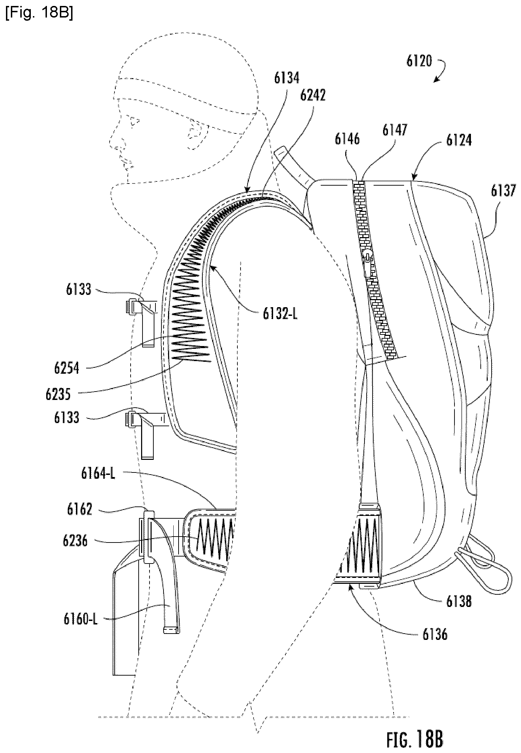

As shown in Figures 18A, 18B and 20, PFO 6236 comprises a single continuous polymer line, thread or filament (such terms being used interchangeably) 6237 that winds back and forth in a serpentine fashion in a lengthwise direction along axis 6139 of each of side panels 6134, extending substantially from the top edge to the bottom edge of each of side panel 6164. In some implementations, PFO 6236, like PFO 6234, is formed from a foamed polymer. In some implementations, PFO 6236, like PFO 6234, is formed from a thermoplastic polyurethane (TPU) material. In the example illustrated, PFO 6236 extend to within the top and bottom edges by distance no greater than 10% of the maximum width of side portions 6164 and/or in some implementations, by distance no greater than 1.5 cm from each of the top end bottom edges of side portions 6164. The serpentine pattern of PFO 6236 provides a degree of flexibility or stretch ability along axis 6139. At the same time, PFO 6236, formed by line 6237 reinforces side panel 6164 in a direction perpendicular to axis 6139 to inhibit an effect known as "roping". Roping occurs when tensile forces along axis 6139 become concentrated along axis 6139. Such "roping" and the concentration of tensile forces along axis 6139 may be uncomfortable to the person wearing waist belt 6136. In contrast, PFO 6236 distributes tensile forces or loads in a vertical direction, generally perpendicular to axis 6139, to inhibit or reduce such roping.

Although line 6237 is illustrated as extending in a zigzag pattern up and down on opposite sides of axis 6139 to form PFO's 6236, in other implementations line 6237 may extend in a serpentine fashion across axis 6139, above and below axis 6139, in other fashions. For example, line 6237 may alternatively vertically undulate across axis 6139 in a square wave pattern or a rounded sine wave pattern. In some implementations, PFO 6236 may be formed from multiple separate lines or filaments that have been separately extruded or deposited onto side panel 6134. In some implementations, line 6235 may be replaced with multiple lines or filaments of polymer material, the multiple lines extending end-to-end or parallel to one another.

In the example illustrated, lines 6237 of PFO 6236 may have a maximum penetration depth into the underlying substrate or panel 6134, similar to that shown in Figure 16D. As result, line 6237 do not offer to alter the surface profile but provide low distribution and reinforcement. In other implementations, line 6237 may have varying penetration depths along their lengths to provide anchoring of PFO's 6236. In some implementations, line 6237 may additionally comprise anchors similar to anchors 5073 (shown and described above with respect to Figure 13A).

In the illustrated example, line 6237 of PFO 6236 extends along the outermost side of waist belt 6136, facing away from the waist of the person wearing waist belt 6136. In other implementations, at least portions of PFO 6236 may be covered by one or more additional layers that extend on top of our over PFO 6236, concealing PFO 6236. In some implementations, PFO 6236 may additionally comprise pillars or posts 5109 or 5119 (shown and described above with respect to Figures 13D and 13E), wherein the overlying panels are supported by or are secured upon the pillars or posts.

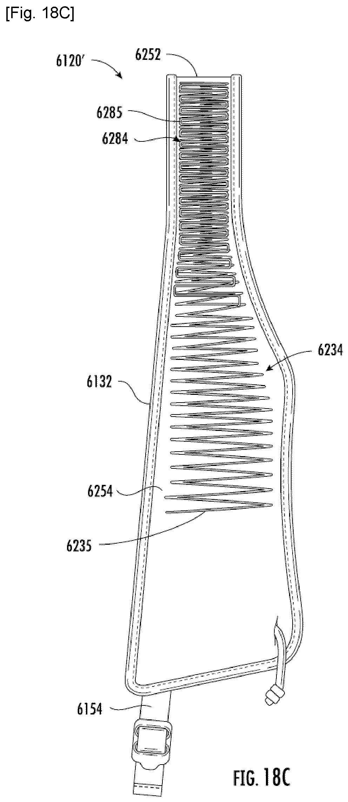

Figure 18C illustrates an example backpack 6120'. Backpack 6120' is similar to backpack 6120 described above except that the shoulder straps 6132 of backpack 6120' additionally comprise PFO 6284. PFO 6284 is formed by an individual thread, filament or line 6285 that winds back and forth in a serpentine fashion over or on top of PFO 6234 in the shoulder top regions 6252. PFO 6284 has a different layout or pattern as compared to PFO 6234. Whereas PFO 6234 is zigzag, PFO 6284 is more akin to a square wave. In other implementations, pattern 6234 and pattern 6284 may each have different patterns wherein such patterns are different. In still other implementations, PFO 6234 and 6284 may have similar patterns but different densities, line thicknesses or line widths.

In some implementations, line 6285 may be fused to the underlying line 6235. For example, in some implementations, both of line 6235 and 6285 may be formed from a thermoplastic material, wherein line 6285 is extruded at a sufficiently high temperature such that underlying portions of line 6235 melt and become fused to the material of line 6285. In some implementations, lines 6235 and 6285 are formed from the same polymer material. In some implementations, lines 6285 and line 6235 are formed from different polymer materials. In some implementations, line 6285 may be directly deposited on top of the underlying panel or substrate of shoulder strap 6132, wherein line 6285 crosses and bridges over underlying portions of line 6235. In such implementations, both of lines 6235 and 6285 may be at least partially embedded in and below the surface of the underlying substrate provided by the one or more panels of shoulder strap 6132.

Lines 6285 and PFO 6284 provide the shoulder top regions 6252 with a greater height for enhanced abrasion resistance. In some implementations, PFOs 6234 and 6285 are formed on a bottom or underside of shoulder strap 6132, so as to extend between the top or exterior side of shoulder strap 6132 and the shoulders of the person wearing backpack 6120'. The additional height provided by the stacking of PFO 6234 and 6284 may provide additional cushioning for the person wearing backpack 6120'. In some implementations, with the addition of PFO 6284 to provide abrasion resistance and/or cushioning, those portions of PFO 6234 on the shoulder top portion 6252 may alternatively be extruded or deposited so as to penetrate the underlying substrate or panel of shoulder strap 6132 by a greater depth for enhanced retention and interlocking of PFO 6234 to shoulder strap 6132.

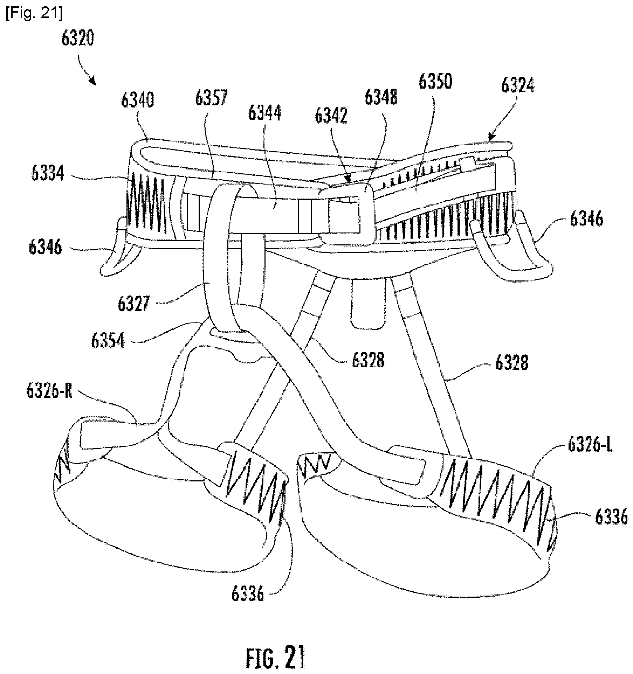

Figures 21-23 illustrate an example piece of gear in the form of a harness 6320 comprising example patterned filament overlays (PFOs) 6334 and 6336. Overlays 6334 and 6336 may be formed from a foamed polymer, or a non-foamed polymer. In some implementations, the polymer may comprise a thermoplastic polyurethane (TPU) material. Harness 6320 comprises waist belt 6324 (sometimes referred to as a swami in the context of a harness), leg loops 6326-R and 6326-L (collectively referred to as leg loops 6326), belay loop 6327, and leg loop risers 6328). In some implementations, harness 6320 may comprise additional primary components that encircle or wrap about the shoulders and/or chest of the person wearing harness 6320. Although the present invention is shown incorporated into a climbing harness, the invention is also applicable to other harnesses and packs.

Waist belt 420 is configured to support leg loops 526 from the waist of a person wearing harness 400. Waist belt 424 is further configured to be attached to a tether, rope, cable or other flexible line from which waist belt 424 may be suspended from an upper support to limit an extent to which waist belt 424 and the person wearing harness 400 may fall from the upper support. Waist belt 6324 comprises waist band 6340, connector 6342, upper tie-in 6344 and gear loops 6346. Waist band 6340 comprises a band; the band being configured to wrap about the waist of the person wearing harness 6320. As will be described hereafter, PFO 6334 is deposited formed upon at least portions of waist band 6340 to reinforce waist band 6340 (permitting lighter weight materials to be utilized) and to reduce roping.

Connector 6342 joins opposite end portions of waist band 6340. In the example illustrated, connector 6342 provides length adjustability, wherein end portion of waist band 6340 may be spaced apart from one another or may overlap one another by varying extents to accommodate different waist sizes. In the example illustrated, connector 6342 comprises buckle 6348 and adjustment strap 6350. Buckle 6348 is secured to one and of waist band 6340 while adjustment strap 6350 is connected to the other end of waist band 63040 6340 and wraps about portions of the buckle 6348. In other implementations, connector 6342 may have other configurations. In some implementations, connector 6342 may be omitted, wherein waist belt 6324 is not size adjustable.

Upper tie-in 6344 comprises a band, strap or cord having opposite ends secured to waist band 6340 by stitching or integrated into waist bans 6340 so as to form a loop or opening for receiving belay loop 6327. In other implementations, upper tie-in 6344 may have other configurations. For example, upper tie-in 6344 may comprise a ring or other structure secured to waist band 6340.

Gear loops 6346 comprise loops formed at various locations along the length of waist band 6340. Gear loops 6346 provide loops to which supplies, equipment or gear may be attached to waist belt 6324. For example, equipment having associated carabiners may be snapped onto one of the gear loops 6346 for suspending the equipment from waist belt 6324. In some implementations, gear loops 6346 may be omitted.

Leg loops 6326-R and 6326-L extend from and are suspended from the right and left front sides, respectively, of waist belt 6324. Leg loops 6326-R and 6326-L are configured to be wrapped about the right and left thighs, respectively, of the person wearing harness 6320. Leg loops 6326 are substantially identical to one another. In some implementations, leg loops 6326 are fastened or affixed to waist belt 6324 by stitching and the like. In some implementations, leg loops 6326 are integrally formed with waist belt 6324, such as where fibers or strands of the leg loops continuously extend throughout both of the leg loops 6326 and portions of waist band 6340. In some implementations, leg loops 6326 have an adjustable length to provide an adjustable inner opening for accommodating differently sized thighs.

As shown by Figure 21, leg loops 6326 are connected to one another at a lower tie-in 6354 which forms a ring or loop for receiving belay loop 6327. In some implementations, each of leg loops 6326 may have an associated loop, wherein the belay loop 63627 passes through the aligned to loops of the leg supports 6326. In other implementations, the lower tie-in for connecting the belay loop 6327 to the two leg loops 6326 may have other configurations.

Belay loop 6327 comprises a ring or loop extending about upper tie-in 6344 and lower tie-in 6354 to suspend both of leg loops 6326 from waist belt 6324. Belay loop 6327 also provides a connection point for a tether support line, in the form of a rope, cable, strap or the like configured to be suspended from an upper support. For example, in some implementations, the tether support line may comprise a carabiner which is snapped onto the belay loop 6327. In some implementations, such belay loops may be formed from materials such as nylon, polyester, ultra-high molecular weight yarns, liquid crystal polymers such as VECTRAN, or other fibers.

Leg loop risers 6328 comprises straps, cords or the like which each have a first end connected to an underside of respective leg loops 6326, and a second end connected to a rear of waist belt 420. Leg loop risers 6328 assist in supporting and suspending leg loops 6326 from waist belt 6324.

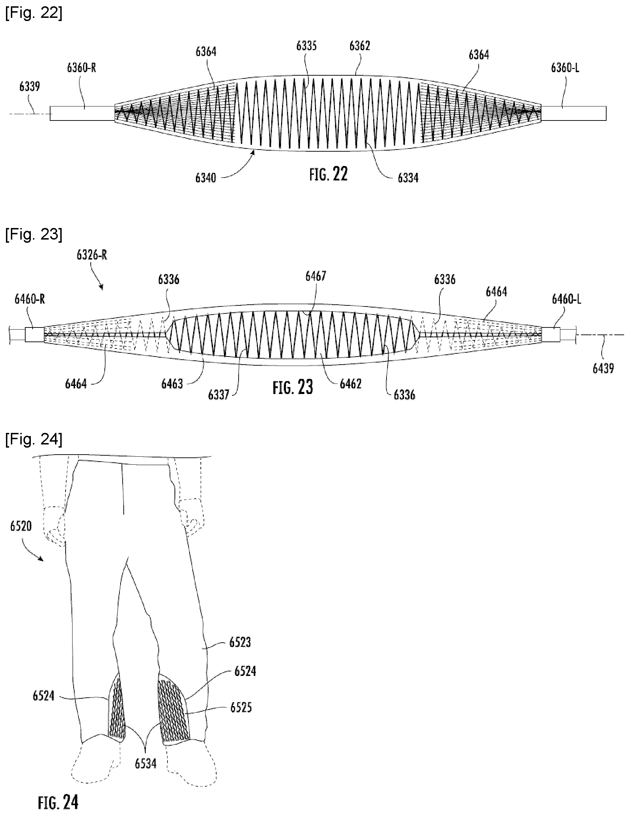

Figure 22 illustrates portions of the example waist band 6340 laid out to best illustrate PFO 6334. As shown by Figure 22, waist band 6340 comprises straps 6360-R, 6360-L (collectively referred to as strap 6360) and central panel(s) 6362. Strap 6360 each have splayed ends, wherein the splayed fibers 6364 are spread out or fanned out across the width of central panel 6362. In some implementations, fibers 6364 are sandwiched between a pair of central panel 6362. In other implementations, fibers 6364 are sandwiched between folded over portions of a central panel 6362. The multiple panels are secured to one another, or the folds of the folded panel are maintained in a folded state by adhesives, stitching, fusing/welding and the like. In some implementations, strap 6360-R is secured to padding 6357 (shown in Figure 21) and is further stitched to upper tie-in 6344. In some implementations, strap 6360-R is stitched or otherwise joined to strap 6360-L. In some implementations, strap 6360-R is releasably joined to strap 6360-L by one or more buckles, permitting waist belt 6324 to be opened.

As further shown by Figure 22, PFO 6334 comprises a single continuous polymer line, thread or filament (such terms being used interchangeably) 6535 that winds back and forth in a serpentine fashion in a lengthwise direction along axis 6339 of central panel(s) 6362, extending substantially from the top edge to the bottom edge of central panel(s) 6362. In the example illustrated, PFO 6334 extends to within the top and bottom edges by distance no greater than 10% of the maximum width of central panel(s) 6362 and/or in some implementations, by distance no greater than 1.5 cm from each of the top and bottom edges of central panel(s) 6362. The serpentine pattern of PFO 6334 provides a degree of flexibility or stretch ability along axis 6339. At the same time, PFO 6334, formed by line 6335 reinforces central panel(s) 6362 in a direction perpendicular to axis 6339 to inhibit an effect known as "roping" wherein tensile forces along axis 6339 may otherwise become concentrated along axis 6339, such "roping" and the concentration of tensile forces along axis 6339 potentially being uncomfortable to the person wearing waist belt 6324. In contrast, PFO 6334 distributes tensile forces or loads in a vertical direction generally perpendicular to axis 6339 to inhibit or reduce such roping.

Although line 6335 is illustrated as extending in a zigzag pattern up and down on opposite sides of axis 6339 to form PFO 6334, in other implementations line 6335 may extend in a serpentine fashion along and across axis 6339, above and below axis 6339, in other fashions. For example, line 6335 may alternatively vertically undulate across axis 6339 in a square wave pattern or a rounded sine wave pattern. In some implementations, PFO 6334 may be formed from multiple separate lines or filaments have been separately extruded or deposited onto central panel(s) 6362. In some implementations, line 6235 may be replaced with multiple lines or filaments of polymer material, the multiple lines extending end-to-end or parallel to one another.

In the example illustrated, lines 6335 of PFO 6334 may have a maximum penetration depth into the underlying substrate or central panel(s) 6362, similar to that shown in Figure 16D. As a result, line 635 does not alter the surface profile but provides load distribution and reinforcement. In other implementations, line 6335 may have varying penetration depths along their lengths to provide anchoring of PFO 6334. In some implementations, line 6335 may additionally comprise anchors similar to anchors 5073 (shown and described above with respect to Figure 13A).

In the illustrated example, line 6335 of PFO 6334 extends along the outermost side of central panel(s) 6362, facing away from the waist of the person wearing waist belt 6324. In other implementations, at least portions of PFO 6334 may be covered by one or more additional layers that extend on top of our over PFO 6334, concealing PFO 6334. In some implementations, PFO 6334 may additionally comprise pillars or posts 5109 or 5119 (shown and described above with respect to Figures 13D and 13E), wherein the overlying panels are supported by or are secured upon the pillars or posts.

In the example illustrated, line 6335 of PFO 6334 may penetrate the one or more central panels 6362 so as to further at least partially encapsulate or secure the splayed fibers 6364, providing enhanced securement and load distribution. In other implementations, PFO 6334 may be deposited upon smaller portions of central panels 6362 of waist band 6340, such as those portions which are not overlying the splayed fibers 6364. In some implementations, line 6335 of PFO 6334 may be utilized on other configurations of waist band 6340 such as in implementations where waist band 6340 does not comprise splayed fibers 6364, such as where straps 6360 are stitched or otherwise joined to the ends of central panels 6362 without such splayed end fibers.

Figure 23 illustrates leg loop 6326-R and PFO 6336. As noted above, leg loops 6326-L is similar to leg loop 6326-R and also includes PFO 6336. Leg loops 6326-R comprises straps 6460-R, 6460-L (collectively referred to as straps 6460) core 6462 and cover panel 6463. Strap 6460 each have splayed ends, wherein the splayed fibers 6464 are spread out or fanned out across the width of core panel 6462.

Core panel 6462 comprises a long night oval-shaped panel over which splayed fibers 6464 extend and onto which PFO 6336 is deposited. Cover panel 6463 is larger than core panel 64262 having opposite edges that are folded over core panel 6462, covering splayed fibers 6464 and also covering end most portions of PFO 6336. The multiple panels are secured to one another by adhesives, stitching, fusing/welding and the like. In the illustrated example, when folded, cover panel 6463 forms a window 6467 that exposes central portions of PFO 6336. In another implementation, cover panel 6463 may be sized and shaped so as to completely cover PFO 6336. In still other implementations, leg loops 6326 may have other configurations. For example, leg loops 6326 may omit the splayed fibers 6464, may omit the folded cover panel 6463 four may include a cover panel that is not folded, that simply is laminated onto our overlaps core panel 6462.

Similar to PFO 6334, PFO 6336 comprises a single continuous polymer line, thread or filament (such terms being used interchangeably) 6337 that winds back and forth in a serpentine fashion in a lengthwise direction along axis 6439 of core panel 6462, extending substantially from the top edge to the bottom edge of core panel 6462. In the example illustrated, PFO 6336 extends to within the top and bottom edges by distance no greater than 10% of the maximum width of core panel 6462 and/or in some implementations, by distance no greater than 1.5 cm from each of the top and bottom edges of core panel 6462. The serpentine pattern of PFO 6336 provides a degree of flexibility or stretch ability along axis 6439. At the same time, PFO 6336, formed by line 6337 reinforces core panel 6462 in a direction perpendicular to axis 6439 to inhibit an effect known as "roping" wherein tensile forces along axis 6439 may otherwise become concentrated along axis 6439, such "roping" and the concentration of tensile forces along axis 6439 potentially being uncomfortable to the person wearing waist belt 6324. In contrast, PFO 6336 distributes tensile forces or loads in a vertical direction generally perpendicular to axis 6439 to inhibit or reduce such roping.

Although line 6337 is illustrated as extending in a zigzag pattern up and down on opposite sides of axis 6439 to form PFO 6336, in other implementations line 6337 may extend in a serpentine fashion along and across axis 6439, above and below axis 6439, in other fashions. For example, line 6337 may alternatively vertically undulate across axis 6439 in a square wave pattern or a rounded sine wave pattern. In some implementations, PFO 6336 may be formed from multiple separate lines or filaments that have been separately extruded or deposited onto core panel 6462. In some implementations, line 6235 may be replaced with multiple lines or filaments of polymer material, the multiple lines extending end-to-end or parallel to one another.

In the example illustrated, lines 6337 of PFO 6336 may have a maximum penetration depth into the underlying substrate or core panel 6462, similar to that shown in Figure 16D. As a result, line 6337 does not alter the surface profile but provides load distribution and reinforcement. In other implementations, line 6337 may have varying penetration depths along their lengths to provide anchoring of PFO 6336. In some implementations, line 6337 may additionally comprise anchors similar to anchors 5073 (shown and described above with respect to Figure 13A).

In the illustrated example, line 6337 of PFO 6336 extends along the outermost side of core panel 6462, facing away from the thigh of the person wearing leg loop. In other implementations, at least portions of PFO 6336 may be covered by one or more additional layers that extend on top of our over PFO 6336, concealing PFO 6336. In some implementations, PFO 6336 may additionally comprise pillars or posts 5109 or 5119 (shown and described above with respect to Figures 13D and 13E), wherein the overlying panels are supported by or are secured upon the pillars or posts.

In the example illustrated, line 6337 of PFO 6336 may penetrate core panel 6462 so as to further at least partially encapsulate or secure the splayed fibers 6464, providing enhanced securement and load distribution. In other implementations, PFO 6336 may be deposited upon smaller portions of core panel 6462, such as those portions which are not overlying the splayed fibers 6464. In some implementations, line 6337 of PFO 6336 may be utilized on other configurations of a leg loop such as in implementations where the leg loop does not comprise splayed fibers 6464, such as where straps 6460 are stitched or otherwise joined to the ends of core panel 6462 without such splayed end fibers.

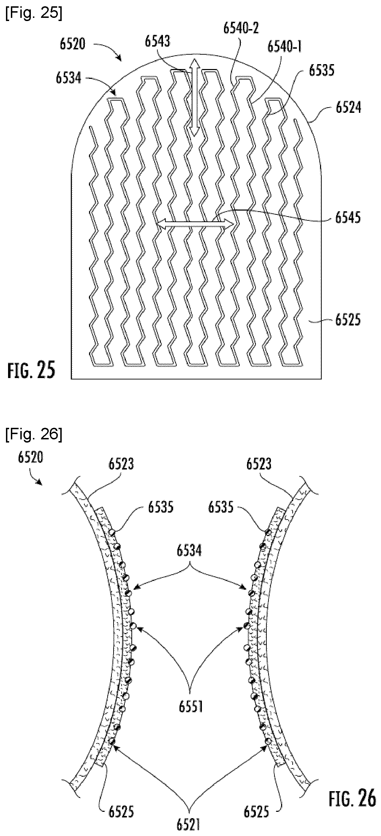

Figures 24 and 25 illustrate an example garment in the form of a pair leg coverings 6520 comprising PFO 6534. Snow leg coverings 6520 comprise insulated leg portions 6523 and insteps 6524 which face one another along the inside lower portions of leg coverings 6520, typically covering the shin and ankles of the person wearing leg coverings 6520. In the example illustrated, instep 6524 comprise panels 6525 stitched, bonded to the inside surfaces of the insulated leg portions 6523. In the example illustrated, snow leg coverings 6520 are in the form of ski pants or snowboarding pants. In other implementations, snow leg coverings 6520 may be associated with shoulder straps or may be provided as part of snow or ski bib.

Figure 25 is an enlarged view of a portion of one of the instep 6524 of leg covering 6520, illustrating PFO 6534 in more detail. PFO 6534 comprises a single continuous line 6535 of polymer material that has been extruded or otherwise deposited upon the underlying substrate provided by the panel 6525 forming instep 6524. In other implementations, the line 6535 of PFO 6534 may be deposited directly upon the insulated leg portions 6523 of leg covering 6520. In some implementations, line 6235 may be replaced with multiple lines or filaments of polymer material, the multiple lines extending end-to-end or parallel to one another. In some implementations, PFO 6534 may be formed from multiple separate lines or filaments that have been separately extruded or deposited.

As shown by Figure 25, line 6535 extends vertically in a zigzag manner, along a vertically serpentine path. The vertical zigzag lines are arranged in pairs of close lines 6540-1, 6540-2 which are separated from adjacent or consecutive pairs of close lines by larger distances. The zigzag path of each vertical line facilitates vertical stretching of an in the direction indicated by arrow 6543) while the horizontal spacing of the pairs of vertical zigzag lines facilitates horizontal stretching or horizontal flexibility (in the direction indicated by arrow 6545). The horizontal flexibility enhances the ability of the lower end of the leg covering 6520 (near the left and right feet) to change shape to accommodate different people in different snow or ski boots.

In the example illustrated, line 6535 projects above or beyond the surface of the underlying substrate panel 6525. In some implementations, line 6535 is a height above the outermost surface of substrate panel 6525 of at least 0.1 mm. In other implementations, the height is at least 0.2 mm. Because line 6535 projects above the outermost surface of substrate panel 6525, line 6535 and PFO 6534 form for protuberances that provide abrasion resistance. This may be especially beneficial on those portions of the instep 6524 where the insteps may contact one another during snow activities such as snowboarding and skiing. In some implementations, the penetration depth of line 6535 may undulate or vary such as alternatively penetrating by a first depth and alternately penetrating by a lesser depth to that shown in Figure 13B, wherein the regions of greater depth form anchors for securing line 6535. For example, in some implementations, line 6535 may have a configuration similar to that shown in shown in Figure 13A with anchors 5073 or a configuration similar to that shown in Figure 13C with anchors 5093. In some implementations, line 6535 may have a configuration similar to that shown in Figure 13D, wherein the upright pillars or posts 5109 provide abrasion resistance.

Figure 26 is a sectional view illustrating the inside portions of an example leg covering 6620. Leg covering 6620 is similar to covering 6520 is similar leg covering 6520 except that lines 6535 have a varying height and varying penetration depth as shown. In particular, those portions of line 6535 have the greatest height and least penetration depth at the apexes 6551 that directly face one another, the circumferential center of PFO 6534. The height above the panel 6525 decreases in the penetration depth into panel 6525 increases as line 6535 extends away from the apexes 6551. As result, the outer ends of PFO 6534 at the greatest amount of anchoring for securement of PFO 6534 while the apexes 6551, located where abrasion may be most prevalent, have the greatest height above panel 6525.

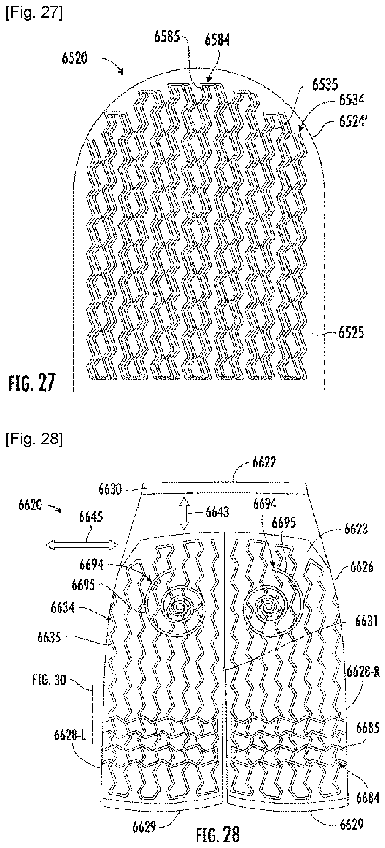

Figure 27 illustrates an alternative PFO 6734 formed on the panel 6525 serving as instep 6524. PFO 6734 is similar to PFO 6534 except that PFO 6634 comprises a second continuous polymer line, threader filament 6735. Line 6635 has the same pattern as line 6535 except that it is horizontally offset with respect to adjacent portions of line 6535. Line 6735 has different material properties than that of line 6535. In the example illustrated, line 6735 comprise a softer, more flexible material (a first durometer polymer while line 6735 comprises a harder, more abrasion resistant material (a second greater durometer polymer). Line 6735 extends above (to the exterior of) of line 6535 to form the outermost surface of instep 6524. The greater hardness or durometer of line 6735 provides enhanced abrasion resistance. In some implementations, line 6735 is extruded or deposited at a temperature so as to fuse or welded to underlying portions of line 6535. In other implementations, instep 6524 (whether formed on panel 6525 or directly formed on the insulated outer panels of portion 6523) may have other PFO's, other patterns. For example, instep 6524 may have any of the above-described patterns of PFOs.

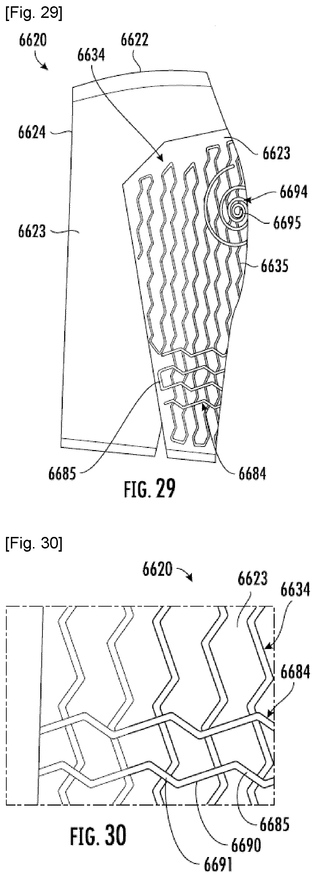

Figures 28-30 illustrate an example garment in the form of a pair of shorts 6620. Figure 28 is a rear perspective view of shorts 6620. Figure 29 is a left side view of shorts 6620, wherein the right side view of shorts 6620 is a mirror image of what is shown in Figure 29. Figure 30 a portion of shorts 6620 defined by the window (referencing Fig. 30) in Figure 28.

In some implementations, shorts 6620 may be in the form of what is sometimes referred to as "scramble shorts". In such implementations, shorts 6620 may have a shorter, above the knee cut to provide for full range of motion during training and competition. Such scramble shorts may incorporate features such as a double layer design with an inner Lycra layer for support and an outer layer for comfort. In some implementations, shorts 6620 may be configured for use in outdoor recreation hiking/climbing/running such as long trails or mountains.

Shorts 6620 are formed by one or more panels 6623 which may be stitched, fuse/welded or adhesively bonded to one another to form the general construction or shape of shorts 6620. Panel(s) 6623 may comprise a textile or fabric which may be penetrated by a polymer in a flowable state. As will be described hereafter, one or more of the panel 6623 or portions thereof may serve as a substrate upon which PFOs 6634, 6684, 6694 are directly deposited and potentially penetrate. In other implementations, separate additional panel(s) supporting PFOs 6634, 6684, 6694 may be stitched, fuse/welded or adhesively bonded on top of the one or more panels 6623 which form the general shape or construction of shorts 6620.

Shorts 6620 generally comprise the waist opening 6622, the front rise 6624, a rear rise 6626, leg portions 6628-L, 6628-R (collectively referred to as leg portions 6628), and PFOs 6634, 6684, 6694. Waist opening 6622 receives the waste of the person wearing shorts 6620. Waist opening 6620 may be defined or bounded by a waist band 6630. The waist band 6630 may be elastic or inelastic. In some implementations, the waist band 6630 may be partially separable, wherein shorts 6620 may include a fly along the front rise.

Front rise generally extends downward from waist opening 6622 along the front of shorts 6620 to a crotch 6631. Similarly, rear rise 6626 extends downwardly from waist opening 6622 to crotch 6631 along a rear face or side of shorts 6620. Leg portions 6628 extend downwardly from front rise 6624 and rear rise 6626 below crotch 6631. The length of leg portions 6628 (the length of the inseam) or the extent to which leg portion 6628 cover the person's legs may vary. In some implementations, leg portions 6628 extend about and cover the person's thighs, terminating above the person's ankles. In some implementations, leg portions 6628 may be eliminated, wherein short 6634 terminates at just below crotch 6631 or may be extended to the person's knees or downwardly beyond the person's knees. In some implementations, leg portions 6628 may be sufficiently long such that the garment shown in Figures 28-30 may alternatively be termed as a pair of pants.

PFOs 6634, 6684 and 6694 provide shorts 6620 with enhanced abrasion resistance across selected portions or regions of shorts 6620. Such abrasion resistance may be especially beneficial for when shorts 6620 are used in outdoor recreation activities such as hiking/climbing/running. For example, during such activities, the hiker/climber/runner may slide on his or her rear side on the underlying terrain, wherein the abrasion resistance provided by PFO 6634 and 6684 increase the durability of shorts 6620 and may lessen injury or abrasion to the anatomy of the person wearing shorts 6620. In particular implementations, PFO 6634, 6684, 6694 may further reinforce selected portions of the panel 6623 forming shorts 6620 to increase the durability shorts 6620 or to potentially permit the use of lighter and/or more breathable fabric for panels 6623 without substantially impairing the durability of shorts 6620.

PFO 6634 comprises a single continuous line 6635 of polymer material that has been extruded or otherwise deposited directly upon the underlying substrate provided by the one or more panels 6623. In other implementations, the line 6535 of PFO 6534 may be deposited directly upon an additional panel or set of panels which are themselves stitched, fuse/welded or adhesively bonded or laminated over and on top of the one or more panels 6623 that are joined to form the shape and construction of shorts 6620. In the example illustrated, PFO 6634 extends across a rear face of rear rise or 6626 and across a rear face of each of leg portions 6628 downward to leg openings 6629. PFO 6634 extends along the sides of shorts 6620, crossing and extending past a midpoint between rear rise 6626 and front rise 6624. In some implementations, line 6635 may be replaced with multiple lines or filaments of polymer material, the multiple lines extending end-to-end or parallel to one another. In some implementations, PFO 6634 may be formed from multiple separate lines or filaments that have been separately extruded or deposited.

In the example illustrated, line 6535 extends vertically in a zigzag manner, along a vertically serpentine path. The zigzag path of each vertical line facilitates vertical stretching of an in the direction indicated by arrow 6643) while the horizontal spacing of the pairs of vertical zigzag lines facilitates horizontal stretching or horizontal flexibility (in the direction indicated by arrow 6645).

In the example illustrated, line 6635 projects above or beyond the surface of the underlying substrate panel 6623. In some implementations, line 66623 has a height above the outermost surface of substrate panel 6525 of at least 0.1 mm. In other implementations, the height is at least 0.2 mm. Because line 6635 projects above the outermost surface of substrate panel 6623, line 6623 and PFO 6634 form for protuberances that provide abrasion resistance.

As schematically indicated by a lighter representation, in some implementations, the penetration depth of line 6635 of PFO 6634 may vary. Those lighter depicted segments of line 6635 have a greater penetration depth into the underlying panel 6623 as compared to the darker segments of such line 6635. The varying penetration depth may be achieved by varying the vertical distance between the nozzle from which the flowable polymer is deposited or ejected and the underlying porous panel 6623 (or the panel laminated to panel 6623). In the illustrated example, PFO 6634 has greater depth along the sides of shorts 6620 than along the rear of shorts 6620. In the illustrated example, the penetration depth of PFO 6634 gradually increases and the height of PFO 6634 above the underlying panel 6623 gradually decreases along the sides of shorts 6620 as it approaches the front of shorts 6620. As a result, greater abrasion resistance is provided in the rearmost portions of shorts six 620 where abrasion may be grace during sliding of a person on the underlying train and an enhanced penetration, interlocking and bonding of PFO 6634 may be flight along the sides of shorts 6620 where shorts 6620 may experience a lesser degree of abrasion during such sliding.

In some implementations, the penetration depth of line 6635 may undulate or vary such as alternatively penetrating by a first depth and alternately penetrating by a lesser depth to that shown in Figure 13B, wherein the regions of greater depth form anchors for securing line 6535. For example, in some implementations, line 6635 may have a configuration similar to that shown in shown in Figure 13A with anchors 5073 or a configuration similar to that shown in Figure 13C with anchors 5093. In some implementations, line 6535 may have a configuration similar to that shown in Figure 13D, wherein the upright pillars or posts 5109 provide abrasion resistance. In other implementations, the penetration depth the line 6635 may be uniform along its length such that PFO 6634 has a uniform penetration extent and a uniform height across the area of coverage by PFO 6634.

Although shorts 6620 are illustrated with the example pattern for PFO 6634, in other implementations, PFO 6634 may have any of the above-described patterns formed by pattern filament. For example, the segments of line 6635 between the turnarounds (where the line reverses direction) may be linear, omitting the zigzags. Line 6635 may be more rounded at its end portions. Line 65 may alternatively be wavy rather than zigzag. Line 6635 may alternatively crisscross itself at selected regions.

PFO 6684 comprises a second continuous polymer line, thread or filament 6685. Line 6685 has the same pattern as line 6635 except that it horizontally extends over and across portions of PFO 6634 on the rear side of the leg portions 6628. Line 6685 has different material properties than that of line 6635. In the example illustrated, line 6635 comprises a softer, more flexible material (a first durometer polymer while line 6637 comprises a harder, more abrasion resistant material (a second greater durometer polymer). Line 6685 extends above (to the exterior of) of line 6635 to form the outermost surface shorts 6620. The greater hardness or durometer of line 6685 provides enhanced abrasion resistance.

As shown by Figure 30, PFO 6684 crosses over PFO 6634. In some implementations, line 6685 is extruded or deposited at a temperature so as to fuse or welded to underlying portions of line 6635. In some implementations, line 6685 may be directly deposited on top of the underlying substrate or panel 6623 along portions 6690 of line 6685, wherein portions 6691 of line 6685 cross and bridge over underlying portions of line 6635. In such implementations, both of lines 6635 and 6685 may be at least partially embedded in and below the surface of the underlying substrate provided by the one or more panels 6623.

PFO 6694 and its continuous line or filament 6695 extend over top of pattern 6634 on regions of the rear rise 6626 that are configured to lie directly opposite to the buttocks of a person wearing shorts 6620. The line 6695 may be formed from a more rigid, more abrasive resistant polymer as compared to line 6635 to provide enhanced abrasion resistance and locations where high degrees of abrasion are expected. As described above with respect to Figure 30, in some implementations, line 6985 may be directly deposited on top of the underlying substrate or panel 6623, wherein portions of line 6985 cross and bridge over underlying portions of line 6635. In such implementations, both of lines 6635 and 6985 may be at least partially embedded in and below the surface of the underlying substrate provided by the one or more panels 6623.

In other implementations, PFOs 6684 (whether formed on an additional panel or directly formed on the panel 6623 that form the shape of shorts 6620) may have other patterns. For example, PFO 6684 may have any of the above-described patterns of PFOs in other implementations, one or more of PFOs 6634, 6684 and 6694 may cover different extents of shorts 6620 or different portions, both front and rear, of shorts 6620. In some implementations, selected portions of shorts 6620 may include additional PFOs or some of the illustrated example PFOs may be omitted. As with all of the PFOs described throughout this disclosure, the filaments or lines of PFO's 6634, 6684 and 6694 at least partially impregnate or penetrate the underlying substrate or panel. The lines of each of the PFOs described throughout this disclosure may be formed from a polymer material or materials that is/are compatible with the material of the underlying substrate to promote or enhance the bonding and/or fusing/welding of the line to the underlying substrate.

Although the present disclosure has been described with reference to example implementations, workers skilled in the art will recognize that changes may be made without departing from the scope of the claimed subject matter. For example, although different example implementations may have been described as including features providing benefits, it is contemplated that the described features may be interchanged with one another or alternatively be combined with one another in the described example implementations or in other alternative implementations. Because the technology of the present disclosure is relatively complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure.

## Claims

1. A wearable item (6020, 6120), comprising:
at least one panel (6133) forming shoulder portions (6042, 6132) located to extend across and on top of a person's shoulders when the wearable item (6020, 6120) is being worn;
**characterized in that**
the at least one panel (6133) forms a patterned filament overlay (PFO) (6034, 6234, 6236, 6284) on the shoulder portions (6042, 6132), the PFO (6034, 6234, 6236, 6284) comprising an individually formed line (6035, 6235, 6237, 6285) of material crossing itself or extending alongside itself over an area.

2. The wearable item (6020, 6120) of claim 1, further comprising a back portion (6040), interconnecting the shoulder portions (6042, 6132), wherein the PFO (6034, 6234, 6236, 6284) continuously extends from the shoulder portions (6042, 6132) to over portions of the back portion (6040).

3. The wearable item (6020, 6120) of claim 2, wherein the PFO (6034, 6234, 6236, 6284) comprises a first portion on the shoulder portions (6042, 6132) and a second portion on the back portion (6040), the first portion having a first value for an attribute of the PFO (6034, 6234, 6236, 6284) and the second portion having a second value, different than the first value, for the attribute of the PFO (6034, 6234, 6236, 6284).

4. The wearable item (6020, 6120) of claim 3, wherein the attribute of the PFO (6034, 6234, 6236, 6284) is selected from a group of attributes consisting of: layout; thickness; density, penetration and layering.

5. The wearable item (6020, 6120) of claim 3, wherein the attribute of the PFO (6034, 6234, 6236, 6284) comprises density, wherein the first portion has a first density and wherein the second portion has a second density, greater than the first density.

6. The wearable item (6020, 6120) of claim 3, wherein the attribute comprises penetration, wherein the PFO (6034, 6234, 6236, 6284) penetrates the shoulder portions (6042, 6132) by a first depth and wherein the PFO (6034, 6234, 6236, 6284) penetrates the back portion (6040) by a second depth greater than the first depth.

7. The wearable item (6020, 6120) of claim 3, wherein the second portion undulates in horizontal directions along and across a vertical axis.

8. The wearable item (6020, 6120) of claim 1 further comprising a front portion extending from the shoulder portions (6042, 6132), wherein the PFO comprises a first portion on the shoulder portions (6042, 6132) and a second portion on the front portion, the first portion having a first value for an attribute of the PFO (6034, 6234, 6236, 6284) and the second portion having a second value, different than the first value, for the attribute of the PFO (6034, 6234, 6236, 6284).

9. The wearable item (6020, 6120) of claim 8, wherein the attribute of the PFO (6034, 6234, 6236, 6284) is selected from a group of attributes consisting of: layout; thickness; density, penetration and layering.

10. The wearable item (6020, 6120) of claim 9, wherein the attribute of the PFO (6034, 6234, 6236, 6284) comprises density, wherein the first portion has a first density and wherein the second portion has a second density, less than the first density.

11. The wearable item (6020, 6120) of claim 9, wherein the attribute comprises penetration, wherein the PFO (6034, 6234, 6236, 6284) penetrates the first portion by a first depth and wherein the PFO (6034, 6234, 6236, 6284) penetrates the second portion by a second depth less than the first depth.

12. The wearable item (6020, 6120) of claim 8, further comprising a second PFO (6034, 6234, 6236, 6284) on top of the PFO (6034, 6234, 6236, 6284) on the shoulder portions (6042, 6132), the front portion omitting the second PFO (6034, 6234, 6236, 6284).

13. The wearable item (6020, 6120) of claim 12, wherein the first portion of PFO (6034, 6234, 6236, 6284) has a first pattern and wherein the second PFO (6034, 6234, 6236, 6284) has a second pattern different than the first pattern.

14. The wearable item (6020, 6120) of claim 8 further comprising a hip belt (6136), wherein the hip belt (6136) comprises a second PFO (6034, 6234, 6236, 6284) extending along a length of the hip belt (6136).

15. The wearable item (6020, 6120) of claim 14, wherein the second PFO (6034, 6234, 6236, 6284) undulates in vertical directions across and along a longitudinal axis of the hip belt (6136)
